# EUROPÄISCHE PATENTSCHRIFT

(11) **EP 3 559 846 B1**
(45) Veröffentlichungstag und Bekanntmachung des Hinweises auf die Patenterteilung: **16.11.2022**
(21) Anmeldenummer: 17818117.8
(22) Anmeldetag: 15.12.2017
(51) Int. Cl.: G06F 21/32, G06F 21/31, G06K 9/00

(54) **VERFAHREN UND SYSTEM ZUR VERHALTENSBASIERTEN AUTHENTIFIZIERUNG EINES NUTZERS**
METHOD AND SYSTEM FOR THE BEHAVIOR-BASED AUTHENTICATION OF A USER
PROCÉDÉ ET SYSTÈME POUR L'AUTHENTIFICATION D'UN UTILISATEUR BASÉE SUR LE COMPORTEMENT

(30) Priorität: 20.12.2016 DE 102016225648
(43) Veröffentlichungstag der Anmeldung: 30.10.2019
(73) Patentinhaber: Bundesdruckerei GmbH Technology Intellectual Property, 10969 Berlin (DE); neXenio GmbH, 10117 Berlin (DE)
(72) Erfinder: PAESCHKE, Manfred, 16348 Wandlitz (DE); SCHNJAKIN, Maxim, 10245 Berlin (DE); BERGER, Philipp, 10627 Berlin (DE); HENNIG, Patrick, 10437 Berlin (DE)
(74) Vertreter: Richardt Patentanwälte PartG mbB
(86) Internationale Anmeldenummer: PCT/EP2017/083041
(87) Internationale Veröffentlichungsnummer: WO 2018/114675

(56) Entgegenhaltungen:
- EP-A1- 2 458 524
- US-A1- 2007 236 330
- US-A1- 2014 089 673
- US-A1- 2016 234 174

## Beschreibung

Die Erfindung betrifft ein Verfahren und ein System zur verhaltensbasierten Authentifizierung eines Nutzers gegenüber einem mobilen, tragbaren Kommunikationssystem.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die oftmals frei wählbar sind, sind entweder zu kurz und leicht zu merken, was jedoch den Nachteil hat, dass sie schneller zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht sie sich zu merken. Fingerabdrucksensoren haben den Nachteil, dass der Nutzer extra einen vorbestimmten Finger auf diesem platzieren muss. Hält er das mobile, tragbare Kommunikationssysteme in der falschen Hand kann der Fingerabdrucksensoren den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt. Die Druchschrift EP2458524 offenbart ein Verfahren zur Authentifizierung basierend auf seinen Bewegungen.

Der Erfindung liegt demgegenüber die Aufgabe zugrunde, ein verbessertes Verfahren zur Authentifizierung eines Nutzers zu ermöglichen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Die Erfindung schlägt ein Verfahren und ein System zur verhaltensbasierte Authentifikation eines Nutzers gegenüber einem mobilen, tragbaren Kommunikationssystem vor, welches eine Authentifizierung gegenüber dem mobilen, tragbaren Kommunikationssystem ohne PIN oder Passwort ermöglicht. Die Grundlage der Authentifizierung ist ein individuelles intrinsisches Verhalten des Nutzers, welches durch eine natürliche Verhaltensweise des Nutzers definiert ist. Die verhaltensbasierte Authentifikation ermöglicht es dem Nutzer dadurch Zugriff auf sein mobiles, tragbares Kommunikationssystem zu erlangen, dass er sich so verhält, wie er es gewohnt ist. Der Nutzer muss sich daher kein Passwort, keine PIN, keine spezielle Geste oder ähnliche Authentifizierungsmittel merken muss. Ferner setzt die Erfindung nach Ausführungsformen keine Verbindung zu einem Netzwerk außerhalb des mobilen, tragbaren Kommunikationssystems, wie beispielsweise dem Internet, voraus, da alle grundlegenden Daten von dem mobilen, tragbaren Kommunikationssystem erfasst und alle grundlegenden Operationen von dem mobilen, tragbaren Kommunikationssystem beziehungsweise seinem Prozessor ausgeführt werden. Insbesondere sensible Daten, welche ein persönliches Verhalten des Nutzers wiederspiegeln, verbleiben ausschließlich in einem internen Speicher des mobilen, tragbaren Kommunikationssystems.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung gilt, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen auf seine eigene Art und Weise aus. Somit kann einem bestimmten Nutzer eines mobilen, tragbaren Kommunikationssystems ein ganz bestimmtes, charakteristisches grobmotorisches Bewegungsprofil zugeordnet werden. Anhand dieses Bewegungsprofils ist der Nutzer identifizierbar. Die durch den Bewegungssensor erfassten Messdaten werden einem solchen Bewegungsprofil zugeordnet. Das mobile, tragbare Kommunikationssystem ist ferner mit einem Klassifikationsmodul ausgestattet, welches dazu trainiert ist, die Bewegungsmuster des Nutzers zu erkennen. Trainiert bedeutet in diesem Kontext, dass das Klassifikationsmodul durch Auswertung von Trainingsdatensätzen die Fähigkeit erlangt hat generischen und/oder nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Messdaten zu einer für alle Nutzer der der Nutzerkohorte identischen Bewegungsart umfasst. Durch die Auswertung wird ein für die identische Bewegungsart allen Nutzern gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Messdaten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Die Auswertung erfolgt beispielsweise unter Verwendung eines generischen Bewegungsmusters für die bestimmte Bewegungsart, welches zuvor ebenfalls trainiert wurde.

Für das Verfahren zur verhaltensbasierten Authentifizierung eines Nutzers gegenüber einem mobilen, tragbaren Kommunikationssystem wird zwischen zwei Typen von Nutzern unterschieden. Einerseits ist der im mobilen, tragbaren Kommunikationssystem registrierte Nutzer derjenige Nutzer, den das mobile, tragbare Kommunikationssystem erkennen soll. Andererseits ist der aktuelle Nutzer derjenige Nutzer, der das mobile, tragbare Kommunikationssystem aktuell bedienen möchte, wofür er sich authentifizieren muss. Kann der aktuelle Nutzer mit dem im mobilen, tragbaren Kommunikationssystem registrierten Nutzer durch den Authentifizierungsprozess identifiziert werden, so wird dem aktuellen Nutzer der Zugriff auf das mobile, tragbare Kommunikationssystem gewährt. Stimmt der aktuelle Nutzer nicht mit dem im mobilen, tragbaren Kommunikationssystem registrierten Nutzer überein, so identifiziert das mobile, tragbare Kommunikationssystem den aktuellen Nutzer als eine andere, nicht nutzungsberechtigte Person und verweigert den Zugriff. Im Folgenden wird mit "der Nutzer" der aktuelle Nutzer des mobilen, tragbaren Kommunikationssystems bezeichnet. Ist der im mobilen, tragbaren Kommunikationssystem registrierte Nutzer gemeint, ist dies explizit als "der registrierte Nutzer" gekennzeichnet.

Ein mobiles, tragbares Kommunikationssystem kann aus einem einzelnen eigenständigen Gerät oder aus mehreren mechanisch und/oder kommunikativ miteinander verbundenen Geräten bestehen. Ein solches Gerät kann zum Beispiel umfassen: ein Smartphone, ein Tablet, einen Personal Digital Assistant, einen Pager, Smart-Glasses, eine Smart-Watch, ein Navigationsgerät, einen Activity Tracker, ein Gerät zur Erfassung medizinischer Daten, insbesondere physiologischer Daten wie ein Pulsmessgerät oder ein Blutdruckmessgerät. Das Verfahren zur verhaltensbasierten Authentifizierung lässt sich von allen mobilen und tragbaren Geräten und Systemen ausführen, die in der Lage sind, elektronisch Daten zu verarbeiten und mindestens einen Sensor zur Erfassung einer grobmotorischen Bewegung aufweisen.

Beispielhaft könnte ein mobiles, tragbares Kommunikationssystem aus einem Smartphone und einer Smart-Watch bestehen, wobei das Smartphone einen Sensor zur Erfassung der grobmotorischen Bewegung des Gehens aufweist und die Smart-Watch den Puls und den Blutdruck des Nutzers misst. Anhand eines Vergleichs der Daten des Nutzers und des registrierten Nutzers kann der Nutzer als der registrierte Nutzer identifiziert werden oder nicht.

Ein solches mobiles, tragbares Kommunikationssystem weist zur Ausführung des Verfahrens zur verhaltensbasierten Authentifizierung eines Nutzers gegenüber dem mobilen, tragbaren Kommunikationssystem mindestens einen Sensor zur Erfassung von Messdaten einer grobmotorischen Bewegung des Nutzers (im Folgenden nur "Messdaten" genannt), ein Grobmotorikklassifikationsmodul, ein Betriebssystem, einen Prozessor und einen internen Speicher auf. Der Sensor zur Erfassung der Messdaten ist dazu konzipiert, eine grobmotorische Bewegung des Nutzers zu erfassen. Das Grobmotorikklassifikationsmodul ist für die Klassifikation der Messdaten konfiguriert, auf das Erkennen einer grobmotorischen Bewegung des Nutzers trainiert und wird durch den Prozessor des mobilen, tragbaren Kommunikationssystems ausgeführt, wobei das Betriebssystem dazu in der Lage ist den Zugriff auf das mobile, tragbare Kommunikationssystem aufgrund des Erfolgs der Authentifizierung zu steuern.

Das Verfahren zur verhaltensbasierten Authentifizierung eines Nutzers gegenüber einem mobilen, tragbaren Kommunikationssystem kann in zwei operative Abschnitte unterteilt werden. Abschnitt A umfasst ein wiederholtes Ausführen der folgenden Schritte:
- Erfassen der Messdaten durch den mindestens einen Sensor des mobilen, tragbaren Kommunikationssystems,
- Eingabe der Messdaten in das Grobmotorikklassifikationsmodul,
- Generieren eines ersten Klassifikationsergebnisses durch das Grobmotorikklassifikationsmodul, ob der aktuelle Nutzer der in dem mobilen, tragbaren Kommunikationssystem registrierte Nutzer ist und
- Speichern des ersten Klassifikationsergebnisses in dem Speicher des mobilen, tragbaren Kommunikationssystems.

Diese Schritte werden wiederholt ausgeführt, wodurch fortlaufend Klassifikationsergebnisse generiert und in dem Speicher des mobilen, tragbaren Kommunikationssystems gespeichert werden.

Im zweiten Abschnitt des Verfahrens sendet eine Anwendung, welche von dem mobilen, tragbaren Kommunikationssystem ausgeführt wird, eine Authentifizierungsanfrage an das Betriebssystem des mobilen, tragbaren Kommunikationssystems und/oder ein für die Authentifizierung konfiguriertes Anwendungsprogramm, welches auf dem mobilen, tragbaren Kommunikationssystem implementiert ist. Eine Anwendung kann beispielsweise ein Anwendungsprogramm bzw. eine Applikation umfassen, welche auf dem mobilen, tragbaren Kommunikationssystem implementiert ist und/oder über das mobile, tragbare Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Eine solches Anwendungsprogramm kann beispielsweise dazu konfiguriert sein eine nützliche oder gewünschte, nicht systemtechnische Funktionalität zu bearbeiten oder zu unterstützen.

Auf die Authentifizierungsanfrage hin greift der Prozessor des mobilen, tragbaren Kommunikationssystems auf den Speicher zu und liest mindestens ein erstes Klassifikationsergebnis aus. Das mindestens eine erste Klassifikationsergebnis wird dann gegen ein bestimmtes, vordefiniertes Prüfungskriterium geprüft. Erfüllt das mindestens eine erste Klassifikationsergebnis das Prüfungskriterium, so wird ein Signal an das Betriebssystem des mobilen, tragbaren Kommunikationssystems gesendet, wobei das Signal die Information des Erfolges der Authentifizierung des Nutzers gegenüber dem mobilen, tragbaren Kommunikationssystem umfasst. Wird das Prüfungskriterium durch das mindestens eine Klassifikationsergebnis nicht erfüllt, so wird dem Nutzer kein Zugriff auf das mobile, tragbare Kommunikationssystem gewährt.

Gemäß einer Ausführungsform der Erfindung werden die Messdaten durch den mindestens einen Sensor als Datenstrom (Stream) erfasst.

Durch die Erfassung der Messdaten als Stream ergibt sich vorteilhafterweise eine maximal sensible Einteilung der ersten Klassifikationsergebnisse pro Zeiteinheit. Es werden kontinuierlich Messdaten erfasst, welche kontinuierlich zu ersten Klassifikationsergebnissen verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Klassifikationsergebnisse kann jederzeit ein zeitnahes Klassifikationsergebnis aus dem Speicher des mobilen, tragbaren Kommunikationssystems abgerufen werden, ohne dass das mobile, tragbare Kommunikationssystem erst abwarten muss, bis ein vorbestimmtes Messintervall abgelaufen und aktuelle Messdaten verarbeitet wurden. Ferner werden kontinuierlich neue erste Klassifikationsergebnisse generiert, so dass bei einer Authentifizierungsanfrage aktuelle erste Klassifikationsergebnisse zur Verfügung stehen, sofern sich der Nutzer in der nahen Vergangenheit bewegt hat.

In einer weiteren Ausführungsform der Erfindung umfasst das mobile, tragbare Kommunikationssystem ein Anwendungsverhaltensklassifikationsmodul. Das Anwendungsverhaltensklassifikationsmodul ist konfiguriert um Anwendungsdaten eines Nutzers zu klassifizieren und nutzerspezifische Anwendungsmuster in den Anwendungsdaten zu finden.

Die Anwendungsdaten können beispielsweise die folgenden Datentypen umfassen:
- Positionsdaten des mobilen, tragbaren Kommunikationssystems
- Anwendungsnutzungsdaten des Nutzers
- Biometrische Daten des Nutzers
- Verbindungsdaten des mobilen, tragbaren Kommunikationssystems
- Kalender- und Uhrzeitdaten.

Die Positionsdaten des mobilen, tragbaren Kommunikationssystems werden durch ein Verfahren zur Positionsbestimmung durch einen Positionssensor des mobilen, tragbaren Kommunikationssystems erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifikation des Nutzers gegenüber dem mobilen, tragbaren Kommunikationssystem ergibt sich in vorteilhafter Weise, dass ein regelmäßiger Aufenthaltsort des Nutzers (zum Beispiel zu Hause, bei der Arbeit oder an anderen Orten, die er regelmäßig aufsucht) erfasst wird. Ein unberechtigter Nutzer, insbesondere ein Dieb, der das mobile, tragbare Kommunikationssystem benutzt, wird sich in der Regel nicht an den Orten aufhalten, welche der registrierte Nutzer regelmäßig aufsucht. Dadurch ist das mobile, tragbare Kommunikationssystem in der Lage zu erkennen, ob der Nutzer der registrierte Nutzer ist. Damit können die Positionsdaten zur Verbesserung der verhaltensbasierten Authentifikation beitragen.

Die Anwendungsnutzungsdaten beinhalten ein Anwendungsnutzungsverhalten des Nutzers, wobei das Anwendungsnutzungsverhalten Informationen umfasst, welche beschreiben, wann welche Anwendungen vom Nutzer auf dem mobilen, tragbaren Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen der Anwendungsnutzungsdaten des Nutzers in das verhaltensbasierte Authentifizierungsverfahren steigt die Sicherheit des mobilen, tragbaren Kommunikationssystems, da ein unberechtigter Nutzer, insbesondere ein Dieb, welcher das mobile, tragbare Kommunikationssystem gestohlen hat, auch die Anwendungsnutzungsverhalten des Nutzers imitieren müsste, um Zugriff auf Anwendungen, die einer Authentifizierung bedürfen, bzw. zu dem mobilen, tragbaren Kommunikationssystem zu erlangen.

Die biometrischen Daten können durch einen Sensor zur Erfassung von biometrischen Daten erfasst werden. Dabei können die biometrischen Daten unter anderem die Maße des Gesichts, die Stimmfrequenzen des Nutzers, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform der Erfindung können die biometrischen Daten, insbesondere die Maße des Gesichts, das Iris- und/oder Retinamuster und die Ohrmuschelform, erfasst werden, wenn der Nutzer ohnehin sein mobiles, tragbares Kommunikationssystem benutzt und/oder sich authentifizieren möchte. In dem Moment, in dem der Nutzer sein mobiles, tragbares Kommunikationssystem benutzt und/oder sich authentifizieren möchte, kann je nach ausgeführter Anwendung davon ausgegangen werden, dass der Nutzer auf den Bildschirm des Systems schaut. Dies ist beispielsweise bei einer Chat- oder Nachrichtenanwendung der Fall. Da handelsübliche Smartphones und andere Systeme mit Kameras ausgestattet sind, welche auch auf der Seite des Bildschirms auf dem mobilen, tragbaren Kommunikationssystem positioniert sind, ist es möglich, dass eine Hintergrundanwendung des mobilen, tragbaren Kommunikationssystems ein Foto des Nutzers aufnimmt, während er das mobile, tragbare Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das mobile, tragbare Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten ähnlich wie die Messdaten kontinuierlich erfassbar sind, da der Nutzer die Smart-Watch während des regulären Gebrauchs an seinem Handgelenk trägt.

In einer weiteren Ausführungsform umfasst das mobile, tragbare Kommunikationssystem einen Sensor zur Erfassung eines Fingerabdrucks des Nutzers. In vorteilhaften Ausführungsformen ist der Sensor an Stellen des mobilen, tragbaren Kommunikationssystems positioniert, an denen der Nutzer mit seinen Fingerspitzen das mobile, tragbare Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers gegenüber einem mobilen, tragbaren Kommunikationssystem ergibt sich in vorteilhafter Weise, dass die Daten, welche zur Authentifizierung herangezogen werden, höchst persönlich vom Benutzer abhängig sind. Insbesondere biometrische Daten bieten eine hohe Fälschungssicherheit, wodurch die Sicherheit des Authentifizierungsverfahrens gesteigert wird.

Die Verbindungsdaten des mobilen, tragbaren Kommunikationssystems mit anderen kommunikationsfähigen Geräten wie zum Beispiel Computern, kommunikationsfähigen Haushaltsgeräten oder einzelnen, mobilen, tragbaren Kommunikationsgeräten und -systemen können dazu verwendet werden, ein typisches Verbindungsmuster des Nutzers aufzuzeigen. So können zum Beispiel einzelne Geräte über WLAN, Bluetooth, Radio Frequency Identification (RFID), Near Field Communikation (NFC) oder ein Kabel mit dem mobilen, tragbaren Kommunikationssystem verbunden werden. So kann für den Nutzer ein Verbindungsprofil angelegt werden, welches Informationen über die regelmäßigen Verbindungen des mobilen, tragbaren Kommunikationssystems mit weiteren Geräten enthält.

Beispielsweise kann ein Nutzer das mobile, tragbare Kommunikationssystem mit dem privaten WLAN einer Wohnung oder einem öffentlichen WLAN verbinden. In einer weiteren Ausführungsform der Erfindung verbindet der Nutzer das mobile, tragbare Kommunikationssystem mit Haushaltsgeräten und/oder einem Computer über das Internet oder ein Intranet, wodurch sich ein nutzerspezifisches Verbindungsprofil ergibt. Dieses Nutzungsprofil kann beispielsweise, ohne darauf beschränkt zu sein eine Waschmaschine, einen Trockner, einen Kühlschrank oder ähnliche Haushaltsgeräte, sowie Geräte eines Smart-Home-Systems, wie etwa Beleuchtung, Alarmanlage, Klimaanlage, Heizung, Audioanlage(n), Video- bzw. Fernsehanlage(n), und/oder einen PC umfassen, welche der Nutzer zu Hause über das Internet, ein Intranet oder individuelle Funkverbindungen ansteuert.

In einer weiteren Ausführungsform der Erfindung wird eine Authentifizierungsanfrage durch ein mit dem mobilen, tragbaren Kommunikationssystem verbundenen Gerät an das Betriebssystem des mobilen, tragbaren Kommunikationssystems und/oder ein für die Authentifizierung konfiguriertes Anwendungsprogramm, welches auf dem mobilen, tragbaren Kommunikationssystem implementiert ist, gesendet, um den Nutzer gegenüber den Geräten zu authentifizieren, welche mit dem mobilen, tragbaren Kommunikationssystem verbunden sind.

Durch die Verwendung der Verbindungsdaten des Nutzers zur verhaltensbasierten Authentifizierung des Nutzers gegenüber einem mobilen, tragbaren Kommunikationssystem ergibt sich in vorteilhafter Weise, dass ein unberechtigter Nutzer die Geräte kennen und ggf. Zugriff auf die Geräte besitzen muss, mit denen der registrierte Nutzer normalerweise das mobile, tragbare Kommunikationsgerät verbindet.

Durch die Verwendung der Verbindungsdaten zur verhaltensbasierten Authentifikation eines Nutzers gegenüber einem mobilen, tragbaren Kommunikationssystem ergibt sich in vorteilhafter Weise, dass der aktuelle Nutzer, welcher zum Beispiel eine Smartwatch trägt, sich über das Tragen der Smartwatch auf seinem mobilen, tragbaren Kommunikationssystem authentifizieren kann. Somit fungiert die Smartwatch als eine Art Schlüssel, welche den Zugriff auf das mobile, tragbare Kommunikationssystem freigibt. Ein Dieb, welcher das mobile, tragbare Kommunikationssystem gestohlen hat, müsste also auch die Smartwatch in seinen Besitz bringen, um Zugriff auf das mobile, tragbare Kommunikationssystem zu erlangen.

Kalender- und/oder Uhrzeitdaten können durch eine im mobilen, tragbaren Kommunikationssystem implementierte Uhr oder eine externe Uhr, deren Signal durch einen Sensor, insbesondere ein Funksignal durch einen Funksensor, des mobilen, tragbaren Kommunikationssystems empfangen wird, erfasst werden.

In einer weiteren Ausführungsform der Erfindung werden die Verbindungsdaten des mobilen, tragbaren Kommunikationssystems mit anderen Geräten und/oder die Positionsdaten des mobilen, tragbaren Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers gegenüber dem mobilen, tragbaren Kommunikationssystem ergibt sich in vorteilhafter Weise, dass insbesondere durch die Kommunikation mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein mobiles, tragbares Kommunikationssystem liest. Die Verwendung der Kalender- und/oder Uhrzeitdaten haben somit eine erhöhte Sicherheit des mobilen, tragbaren Kommunikationssystems zur Folge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist.

In einer weiteren Ausführungsform wird der Abstand zwischen zwei oder mehreren Kommunikationsgeräten eines mobilen, tragbaren Kommunikationssystems aufgrund der Signalstärke des Signals der Drahtlosverbindung zwischen den Geräten ermittelt. Ein solches Drahtlosverbindungssignal kann beispielsweise ein Bluetooth-Signal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers gegenüber einem mobilen, tragbaren Kommunikationssystem verwendet werden.

Das Erfassen des Abstandes zweier Geräte eines mobilen, tragbaren Kommunikationssystems als Teil der Anwendungsdaten und das Verwenden des Abstandes zur verhaltensbasierten Authentifizierung des Nutzers gegenüber dem mobilen, tragbaren Kommunikationssystem ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das mobile, tragbare Kommunikationssystem zu erlangen.

Nach Ausführungsformen der Erfindung wird der Abstand dazu verwendet, um ein grobmotorische Bewegungsmuster des Nutzers zu erkennen.

Um die Anwendungsdaten zur verhaltensbasierten Authentifizierung des Nutzers gegenüber einem mobilen, tragbaren Kommunikationssystem zu verwenden, werden folgende Schritte ausgeführt:
- Erfassen der Anwendungsdaten,
- Eingabe der Anwendungsdaten in das Anwendungsverhaltensklassifikationsmodul,
- Generieren eines zweiten Klassifikationsergebnisses durch das Anwendungsverhaltensklassifikationsmodul, ob der aktuelle Nutzer der in dem System registrierte Nutzer ist,
- Speichern des zweiten Klassifikationsergebnisses in dem Speicher des mobilen, tragbaren Kommunikationssystems.

Beim Prüfen des ersten Klassifikationsergebnisses gegen das Prüfungskriterium wird nicht nur das erste Klassifikationsergebnis, welches auf den Messdaten des Sensors zur Erfassung grobmotorischer Bewegung beruht, herangezogen, sondern auch das zweite Klassifikationsergebnis, das sich aus den Anwendungsdaten des Nutzers ergibt.

In einer weiteren Ausführungsform der Erfindung umfasst das mobile, tragbare Kommunikationssystem ein Feinmotorikklassifikationsmodul, welches dazu ausgebildet ist eine feinmotorische Bewegung des Nutzers zu erfassen und einen Sensor zur Erfassung einer feinmotorischen Bewegung in Form von feinmotorischen Messdaten.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand und/oder Fingermuskulatur, aber auch den Muskeln des Mundes, der Augen und des Gesichtes. Die feinmotorische Bewegung, welche durch einen feinmotorischen Sensor des mobilen, tragbaren Kommunikationssystems erfasst wird, kann etwa eine bestimmte Bewegung der Finger umfassen.

In Ausführungsformen der Erfindung werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das mobile, tragbare Kommunikationssystem tätigt. Eine solche Eingabe kann beispielsweise, ohne darauf beschränkt zu sein, das Tippen von Wörtern bzw. Wischen von Wörtern, d.h. einem zu Tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung mit der der Nutzer eine Eingabe tätigt sein. Ferner können feinmotorischen Bewegungen Änderungen der Ausrichtung, wie etwa des Neigungswinkels, des mobilen, tragbaren Kommunikationssystems während der Nutzung umfassen.

Ein Sensor zur Erfassung einer feinmotorischen Bewegung kann als beispielsweise als optisches System oder als Touchpad bzw. Touchscreen, insbesondere, jedoch ohne darauf beschränkt zu sein, ein resistiver Touchscreen, ein oberflächenkapazitiver Touchscreen, ein projiziert-kapazitiver Touchscreen oder ein induktiver Touchscreen ausgebildet sein.

Um die feinmotorischen Messdaten zur feinmotorischen Authentifizierung des Nutzers gegenüber einem mobilen, tragbaren Kommunikationssystem zu verwenden, werden die folgenden Schritte ausgeführt:
- Erfassen der feinmotorischen Messdaten,
- Eingabe der feinmotorischen Messdaten in das Feinmotorikklassifikationsmodul,
- Generieren eines dritten Klassifikationsergebnisses durch das Feinmotorikklassifikationsmodul, ob der aktuelle Nutzer der in dem System registrierte Nutzer ist,
- Speichern des dritten Klassifikationsergebnisses in dem Speicher des mobilen, tragbaren Kommunikationssystems.

Beim Prüfen des ersten Klassifikationsergebnisses gegen das Prüfungskriterium wird nicht nur das erste Klassifikationsergebnis, welches auf den Messdaten des Sensors zur Erfassung der grobmotorischen Bewegung beruht, herangezogen, sondern auch das dritte Klassifikationsergebnis, das sich aus den feinmotorischen Messdaten des Nutzers ergibt.

Durch das Verwenden einer feinmotorischen Bewegung eines Nutzers erhöht sich die Sicherheit des Verfahrens, da weitere Parameter nötig sind, um den Nutzer gegenüber dem mobilen, tragbaren Kommunikationssystem zu authentifizieren.

In einer weiteren Ausführungsform der Erfindung wird nach einem fehlgeschlagenen Authentifizierungsversuch der Nutzer dazu aufgefordert eine Eingabe in das mobile, tragbare Kommunikationssystem zu tätigen, um eine feinmotorische Bewegung des Nutzers erfassen zu können. Die Eingabe kann dabei beispielsweise das Nachmalen einer bestimmten Figur auf dem Bildschirm oder die Eingabe eines vordefinierten Wortes bzw. die Eingabe mehrerer Wörter umfassen. Die Wörter und/oder Muster können durch das System oder den Nutzer vordefiniert oder zufällig ausgewählt sein. Beispielsweise werden die entsprechenden Wörter und/oder Muster auf dem Bildschirm angezeigt.

Durch das Authentifizieren mittels einer feinmotorischen Bewegung im Falle einer fehlgeschlagenen Authentifizierung mittels einer grobmotorischen Bewegung und/oder Anwendungsdaten, ergibt sich vorteilhafterweise für den Nutzer die Möglichkeit sich trotz einer fehlgeschlagenen Authentifizierung über eine grobmotorische Bewegung und/oder sein Anwendungsnutzungsverhalten zu Authentifizieren ohne dabei auf eine PIN oder ein Passwort zurückgreifen zu müssen.

Aufgrund der Ähnlichkeit der Verarbeitungsstruktur der Messdaten und der Anwendungsdaten gelten die folgenden Ausführungen für die Messdaten und die Anwendungsdaten, das Grobmotorik-, Anwendungsverhaltens- und Feinmotorikklassifikationsmodul sowie das erste, zweite und/oder dritte Klassifikationsergebnis gleichermaßen. So wird im Folgenden beispielsweise "das Klassifikationsergebnis" stellvertretend für "das erste und/oder zweite und/oder dritte Klassifikationsergebnis" verwendet. Es sei angemerkt, dass der Plural "Klassifikationsergebnisse" dann auch eine Mehrzahl der ersten und/oder zweiten und/oder dritten Klassifikationsergebnisse umfasst. Ferner bezeichnet "Messdaten" im Folgenden die Messdaten des Sensors zur Erfassung einer grobmotorischen Bewegung und/oder die Messdaten des Sensors zur Erfassung einer feinmotorischen Bewegung. Sind nur die Messdaten des Sensors zur Erfassung einer grobmotorischen Bewegung oder einer feinmotorischen Bewegung gemeint, so ist dies explizit angegeben.

Ferner sind gemäß einer weiteren Ausführungsform das Grobmotorikklassifikationsmodul und/oder das Anwendungsverhaltensklassifikationsmodul und/oder das Feinmotorikklassifikationsmodul als ein Klassifikationsmodul ausgebildet, welches in der Lage ist die Messdaten und die Anwendungsdaten zu verarbeiten. Gemäß dieser Ausführungsform generiert das eine Klassifikationsmodul ein einzelnes Klassifikationsergebnis. Beispielsweise sind gemäß einer weiteren Ausführungsform das Grobmotorikklassifikationsmodul und/oder das Anwendungsverhaltensklassifikationsmodul und/oder das Feinmotorikklassifikationsmodul von ein und demselben oder verschiedenen Anwendungsprogrammen umfasst, welche zu einer Ausführung einer verhaltensbasierten Authentifizierung konfiguriert sind.

Das bzw. die Klassifikationsmodule, d.h. das Grobmotorikklassifikationsmodul und/oder das Anwendungsverhaltensklassifikationsmodul und/oder das Feinmotorikklassifikationsmodul, generieren beispielsweise ein gemeinsames Klassifikationsergebnis unter Verwendung von Konfidenzwerten, welche von dem oder den Klassifikationsmodulen jeweils für klassifikationsmodulspezifische Messdaten ermittelt wurden. In diesem Fall handelt es sich bei dem ersten, zweiten und/oder dritten Klassifikationsergebnis um ein und dasselbe Klassifikationsergebnis, zu welchem das Grobmotorikklassifikationsmodul und/oder das Anwendungsverhaltensklassifikationsmodul und/oder das Feinmotorikklassifikationsmodul beitragen.

In einer weiteren Ausführungsform der Erfindung wird bei nichterfolgreicher Prüfung des mindestens einen Klassifikationsergebnisses gegen das Prüfungskriterium ein Signal gesendet, welches die Information der fehlgeschlagenen Authentifizierung umfasst. Ein solches Signal kann gemäß einer Ausführungsform der Erfindung auf die Information der fehlgeschlagenen Authentifizierung beschränkt sein. Gemäß weiterer Ausführungsformen kann das Signal die Information des Grundes des Fehlschlagens der Authentifizierung enthalten. Ein solcher Grund kann nach weiteren Ausführungsformen der Erfindung beispielsweise das Alter des aktuellen mindestens einen Klassifikationsergebnisses, das mindestens eine Klassifikationsergebnis selbst oder einen anders gearteten Grund des Fehlschlagens umfassen. In einer Ausführungsform der Erfindung kann ein Prüfungskriterium umfassen, dass das mindestens eine Klassifikationsergebnis nicht älter als einige Minuten, einige Stunden, ein Tag oder eine Woche ist. In einer weiteren Ausführungsform der Erfindung kann das Prüfungskriterium umfassen, dass das mindestens eine Klassifikationsergebnis einen bestimmten Schwellenwert erreichen muss.

Durch das Senden eines Signals bei fehlgeschlagener Authentifizierung ergibt sich vorteilhafterweise, dass der Nutzer darüber informiert wird, dass seine Authentifizierung fehlgeschlagen ist und sich gezielt so verhalten kann, dass er Zugriff auf das mobile, tragbare Kommunikationssystem erlangen kann. Beispielsweise zeigt das Signal an, dass die Gangart des Nutzers nicht erkannt wurde. Der Nutzer bemerkt das Signal und beginnt auf und ab zu gehen, bis das Prüfungskriterium erfüllt ist. Ein solches Signal kann dem Nutzer beispielsweise mittels einer Anzeige des mobilen, tragbaren Kommunikationssystems angezeigt werden, akustisch über einen Lautsprecher des mobilen, tragbaren Kommunikationssystems mitgeteilt werden oder mittels eines Vibrationsmusters, erzeugt durch einen Vibrationsmechanismus des mobilen, tragbaren Kommunikationssystems, signalisiert werden.

In einer weiteren Ausführungsform der Erfindung ist in dem Speicher des mobilen, tragbaren Kommunikationssystems mindestens ein Muster in Form einer Musterfunktion und mindestens ein Vergleichsdatensatz gespeichert, wobei der Vergleichsdatensatz Werte für mindestens einen Vergleichsparameter beinhaltet, wobei durch das jeweilige Klassifikationsmodul die folgenden Schritte ausgeführt werden:
a) Vergleich der erfassten Messdaten und Anwendungsdaten mit der mindestens einen Musterfunktion.
b) Zuordnen der Messdaten und Anwendungsdaten zu je einem der Musterfunktion entsprechenden Muster und Erhalten von mindestens einem der dem Muster entsprechenden Klassifikationsparameter durch das Klassifikationsmodul, falls die Messdaten und/oder Anwendungsdaten dem mindestens einen Muster zugeordnet werden können.
c) Errechnen eines Konfidenzwertes für jeden Klassifikationsparameter durch einen Vergleich des mindestens einen Klassifikationsparameters mit dem jeweiligen Vergleichsparameter des Vergleichsdatensatzes.
d) Generieren des Klassifikationsergebnisses aus dem mindestens einen Konfidenzwert des mindestens einen Klassifikationsparameters.

Durch das Generieren des Klassifikationsergebnisses aus dem mindestens einen Konfidenzwert des mindestens einen Klassifikationsparameters ergibt sich vorteilhafterweise ein Verfahren, welches durch fest definierte Schritte für den Nutzer wiederholbar, jedoch für einen unberechtigten Nutzer sehr schwer zu umgehen ist. Einem Angreifer, welcher versucht mittels eines elektronischen Angriffs auf das mobile, tragbare Kommunikationssystem zuzugreifen, in dem der Angreifer versucht die Messdaten und Anwendungsdaten des mindestens einen Sensors, den mindestens einen Klassifikationsparameter oder den mindestens einen Konfidenzwert zu erraten, um dem mobilen, tragbaren Kommunikationssystem ein gefälschtes Klassifikationsergebnis vorzutäuschen, müsste die mindestens eine Musterfunktion kennen oder wissen, welche Klassifikationsparameter zu Konfidenzwerten verarbeitet werden und welche Werte diese aufweisen müssen, damit ein Zugriff auf das mobile, tragbare Kommunikationssystem gewährt wird.

In einer weiteren Ausführungsform der Erfindung werden die Konfidenzwerte der Klassifikationsparameter in dem Speicher des mobilen, tragbaren Kommunikationssystems gespeichert. Dabei bildet die Summe der Konfidenzwerte der Klassifikationsparameter das Klassifikationsergebnis.

Durch das Speichern der Konfidenzwerte als Klassifikationsergebnis ergibt sich in vorteilhafterweise, dass die Konfidenzwerte einzeln zur Prüfung herangezogen werden können. In einer weiteren Ausführungsform der Erfindung werden für Authentifizierungsanfragen mit einem niedrigen Prüfungskriterium weniger Konfidenzwerte aus dem Speicher ausgelesen und geprüft, als bei einer Authentifizierungsanfrage mit einem höheren Prüfungskriterium. Ein niedriges Prüfungskriterium kann beispielsweise dann vorliegen, wenn der Nutzer den Radiosender wechseln möchte. Ein hohes Prüfungskriterium kann beispielsweise vorliegen, wenn der Nutzer die im mobilen, tragbaren Kommunikationssystem gespeicherten Kontaktdaten abrufen möchte. In einer weiteren Ausführungsform umfasst das Prüfungskriterium für jeden Konfidenzwert einen anderen Schwellenwert, so dass die Qualität der einzelnen Klassifikationsparameter, aus denen die Konfidenzwerte berechnet werden, bei der Prüfung des Klassifikationsergebnisses gegen das Prüfungskriterium berücksichtigt wird. In einer weiteren Ausführungsform der Erfindung umfasst das Prüfungskriterium, dass der mindestens eine Konfidenzwert einen bestimmten Schwellenwert erreichen muss, um eine erfolgreiche Authentifizierung des Nutzers zu erreichen.

Dadurch, dass das Prüfungskriterium darin besteht, dass ein Konfidenzwert eine Mindesthöhe erreichen muss, ergibt sich in vorteilhafter Weise, dass die Prüfung des Klassifikationsergebnisses gegen das Prüfungsergebnis durch den Vergleich von nur einem Wert durchgeführt werden kann. Für diesen Schritt sind somit sehr wenige Operationen notwendig, wodurch der Prozessor weniger Rechenoperationen ausführen muss. Somit ergibt sich für das mobile, tragbare Kommunikationssystem ein verringerter Energieverbrauch. Insbesondere für mobile, tragbare Kommunikationssysteme, welche durch eine Batterie betrieben werden, ist eine solche Ausführungsform vorteilhaft.

In einer weiteren Ausführungsform der Erfindung umfasst das Prüfungskriterium, dass mehrere gespeicherte Konfidenzwerte jeweils einen individuellen Schwellenwert erreichen müssen.

Dadurch, dass das Prüfungskriterium jeweils einen individuellen Schwellenwert für mehrere Konfidenzwerte umfasst, kann das Prüfungskriterium individuell an die jeweiligen Genauigkeiten der einzelnen Konfidenzwerte angepasst werden. Dadurch ergibt sich eine erhöhte Genauigkeit des gesamten Authentifizierungsverfahrens. Nach einer weiteren Ausführungsform der Erfindung wird das zweite Klassifikationsergebnis, welches auf den Anwendungsdaten beruht, nur dann bei der Prüfung der Klassifikationsergebnisse gegen das Prüfungskriterium miteinbezogen, wenn in einem vorangegangenen Schritt das erste Klassifikationsmodul in den Messdaten eine grobmotorische Bewegung des Nutzers erkannt hat. So werden beispielsweise Anwendungsnutzungsdaten eines Radios nur dann erfasst, wenn der Nutzer gerade am Gehen ist. In einer weiteren Ausführungsform der Erfindung kann ein Herausziehen des mobilen, tragbaren Kommunikationssystems aus der Tasche erkannt werden, woraufhin beispielsweise ein Ausführen einer Nachrichtenanwendung als ein Teil des Anwendungsnutzungsprofils herangezogen wird.

Durch das Verwenden des zweiten Klassifikationsergebnisses, welches auf den Anwendungsdaten beruht, in Kombination mit der erkannten grobmotorischen Bewegung des Nutzers ergibt sich in vorteilhafter Weise, dass die Klassifikation des ersten Klassifikationsmoduls, welches die Messdaten heranzieht, wesentlich genauer werden kann, da das Klassifikationsergebnis auf Basis der Anwendungsdaten zur Verfeinerung des Klassifikationsergebnisses aufgrund der Messdaten dienen kann.

In einer weiteren Ausführungsform der Erfindung werden die Konfidenzwerte, welche letztendlich aus den grob- und/oder feinmotorischen Messdaten und/oder den Anwendungsdaten resultieren, zu einem resultierenden Konfidenzwert zusammengefasst. Das Zusammenfassen kann beispielsweise, aber nicht zwangsweise, die Bildung eines Mittelwertes, eines Medians oder eines Modalwerts umfassen. Die Bildung des resultierenden Konfidenzwerts ermöglicht die Angabe der Wahrscheinlichkeit, mit der der aktuelle Nutzer der im mobilen, tragbaren Kommunikationssystem registrierte Nutzer ist.

Durch die Bildung eines resultierenden Konfidenzwertes und die Verwendung des resultierenden Konfidenzwertes zur verhaltensbasierten Authentifizierung des Nutzers gegenüber dem mobilen, tragbaren Kommunikationssystem kann sich in vorteilhafter Weise ergeben, dass zur Authentifizierung nur ein einziger Zahlenwert nötig ist, um den Nutzer zu authentifizieren. Es werden keine Details bezüglich der Anwendungsnutzung oder der Person des Nutzers an die Anwendung, welche der Authentifizierung bedarf, gesendet, um den Nutzer zu authentifizieren. Dies schützt insbesondere die Datensicherheit bzw. die Anonymität des Nutzers, da aus dem resultierenden Konfidenzwert nicht mehr nachvollziehbar ist, aus welchen Konfidenzwerten oder Klassifikationsparametern sich dieser im Detail zusammensetzt und welche Werte diese jeweils aufwiesen.

In einer weiteren Ausführungsform der Erfindung sind die einzelnen Konfidenzwerte der Klassifikationsparameter bei der Auswertung mit jeweils einem Gewichtungsfaktor gewichtet. Die Gewichtungsfaktoren sind dabei dem jeweiligen Konfidenzwert zugeordnet.

Durch das Verwenden von Gewichtungsfaktoren für die jeweiligen Konfidenzwerte bei der Errechnung des resultierenden Konfidenzwerts kann sich in vorteilhafter Weise eine Erhöhung der Genauigkeit des resultierenden Konfidenzwerts bei einer Prüfung gegen ein Prüfungskriterium ergeben. Die einzelnen Konfidenzwerte, die aus unterschiedlichen Klassifikationsparametern resultieren, können je nach Wichtigkeit und/oder Genauigkeit ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers gegenüber dem mobilen, tragbaren Kommunikationssystem. Ein erster Nutzer eines ersten mobilen, tragbaren Kommunikationssystems könnte beispielsweise regelmäßig eine Radioanwendung seines mobilen, tragbaren Kommunikationssystems nutzen, während ein zweiter Nutzer eines zweiten mobilen, tragbaren Kommunikationssystems niemals eine Radioanwendung nutzt. Durch die Möglichkeit des Gewichtens der einzelnen Konfidenzwerte kann dem Konfidenzwert für die Nutzung einer Radioanwendung für den ersten Nutzer ein höherer Gewichtungsfaktor zugewiesen werden, als dem zweiten Nutzer.

In einer weiteren Ausführungsform sind die Gewichtungsfaktoren der Konfidenzwerte durch das Prüfungskriterium vorgegeben.

Durch das Vorgeben der Gewichtungsfaktoren durch das Prüfungskriterium ergibt sich in vorteilhafter Weise, dass unterschiedliche Konfidenzwerte individuell in Abhängigkeit davon gewichtet werden können, wie hoch der Sicherheitsgrad des Prüfungskriteriums ist. So können beispielsweise bei Prüfungskriterien, die einer sehr hohen Authentifizierungswahrscheinlichkeit bedürfen, alle Parameter miteinbezogen werden, wodurch alle Konfidenzwerte zu einem resultierenden Konfidenzwert berechnet werden. Dem gegenüber werden bei einem Prüfungskriterium, welches einer niedrigen Sicherheitsstufe bedarf, nur einige oder ein einzelner Konfidenzwert, bzw. Klassifikationsparameter zur Auswertung herangezogen.

In einer weiteren Ausführungsform der Erfindung sind die einzelnen Gewichtungsfaktoren der jeweiligen Konfidenzwerte fest vorgegeben. Fest vorgegeben meint in diesem Zusammenhang, dass die Gewichtungsfaktoren von vornherein bei einer Erstinbetriebnahme des mobilen, tragbaren Kommunikationssystems festgelegt werden und keine Änderungen der Gewichtungsfaktoren während des bestimmungsmäßigen Betriebes des mobilen, tragbaren Kommunikationssystems vorgesehen sind.

Durch das Vorgeben der Gewichtungsfaktoren für die Konfidenzwerte ergibt sich in vorteilhafter Weise ein reduzierter Rechenaufwand, welcher insbesondere für mobile, tragbare Kommunikationssysteme einen niedrigen Batterieverbrauch zur Folge hat. Das mobile, tragbare Kommunikationssystem muss nicht überprüfen, welche Gewichtungsfaktoren für welchen Konfidenzwert festzulegen sind, sondern letztendlich nur in seinem Speicher die entsprechenden Konfidenzwerte auslesen, die bereits mit den Gewichtungsfaktoren verrechnet sind.

In einer weiteren Ausführungsform der Erfindung legt der Nutzer in einem Initiierungsprozess die Gewichtungsfaktoren der einzelnen Konfidenzwerte selbst fest. Die festgelegten Gewichtungsfaktoren werden dann in einer Konfigurationsdatei in dem Speicher des mobilen, tragbaren Kommunikationssystems gespeichert.

Durch das Festlegen der Gewichtungsfaktoren durch den registrierten Nutzer selbst ergibt sich in vorteilhafter Weise, dass der registrierte Nutzer selbst bestimmen kann, inwieweit seine Anwendungen bzw. Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden der Radioanwendung nicht oder nur sehr schwach in die Generierung des Klassifikationsergebnisses miteingehen soll, da er die Radioanwendung üblicherweise nur unregelmäßig nutzt. Der gleiche Nutzer könnte hingegen die Konfidenzwerte der Positionsbestimmung stärker in die Generierung des Klassifikationsergebnisses miteinfließen lassen, da er einen sehr strukturierten Tagesablauf hat und sich mit hoher Regelmäßigkeit an bestimmten Orten aufhält.

In einer weiteren Ausführungsform der Erfindung wird das Prüfungskriterium durch die ausgeführte Anwendung, welche die Authentifizierung des Nutzers anfragt, festgelegt.

Ein Festlegen des Prüfungskriteriums durch die ausgeführte Anwendung ergibt in vorteilhafter Weise, dass die Sicherheit der Authentifizierung mittels des Prüfungskriteriums durch die Anwendung bestimmt werden kann. So können beispielsweise Anwendungen zum Onlinebanking ein wesentlich höheres Sicherheitsniveau des Nutzers gegenüber dem mobilen, tragbaren Kommunikationssystem erfordern, als eine Musikanwendung.

In einer weiteren Ausführungsform der Erfindung ist das mobile, tragbare Kommunikationssystem mit einem Netzwerk, wie zum Beispiel dem Internet oder einem lokalen Netzwerk (LAN), einem privaten Netzwerk, insbesondere einem Intranet, oder einem virtuellen privates Netzwerk (Virtual Private Network - VPN) verbunden. Innerhalb des Netzwerks kann das mobile, tragbare Kommunikationssystem über eine entsprechende Schnittstelle, die üblicherweise als Browser oder Launcher ausgebildet ist, mit einer Online-Anwendung kommunizieren, wobei die Online-Anwendung auf einem Gerät innerhalb des Netzwerkes aber außerhalb des mobilen, tragbaren Kommunikationssystems ausgeführt wird. Die Online-Anwendung ist in der Lage das mobile, tragbare Kommunikationssystem dazu aufzufordern, sich gegenüber der Anwendung zu authentifizieren woraufhin das mobile, tragbare Kommunikationssystem den resultierenden Konfidenzwert an die Online-Anwendung sendet.

Durch das Senden des resultierenden Konfidenzwerts an die Online-Anwendung ergibt sich in vorteilhafter Weise, dass das mobile, tragbare Kommunikationssystem in der Lage ist, den Nutzer gegenüber Anwendungen zu authentifizieren, die nicht auf dem mobilen, tragbaren Kommunikationssystem installiert sind. Das Verfahren benötigt somit keine auf dem mobilen, tragbaren Kommunikationssystem installierte Anwendung.

In einer weiteren Ausführungsform der Erfindung sind auf dem mobilen, tragbaren Kommunikationssystem mehrere Nutzer registriert und das Klassifikationsergebnis wird für jeden registrierten Nutzer generiert. Ein Nutzererkennungsmodul entscheidet dann, welcher Nutzer gerade aktiv ist, wobei das Nutzererkennungsmodul ebenfalls vom Prozessor des mobilen, tragbaren Kommunikationssystems ausgeführt wird.

In einer weiteren Ausführungsform der Erfindung wird die Identifikation des Nutzers durch das Nutzererkennungsmodul mittels eines Entscheidungsbaums getroffen.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, wobei die Mehrzahl von Mitarbeitern, welche das jeweilige mobile, tragbare Kommunikationssystem abwechselnd benutzen, das Verfahren zur verhaltensbasierten Authentifizierung anwenden können.

In einer weiteren Ausführungsform der Erfindung ist das Nutzererkennungsmodul so konfiguriert, dass es einen Wechsel des Nutzers anhand von grob- und/oder feinmotorischen Messdaten erkennt. Das Nutzererkennungsmodul generiert ein viertes Klassifikationsergebnis, welches angibt, welcher der registrierten Nutzer gerade der aktuelle Nutzer ist. Das vierte Klassifikationsergebnis wird dann gebildet, wenn das Nutzererkennungsmodul eine Bewegung erkennt, die typisch für einen Nutzerwechsel eines mobilen, tragbaren Kommunikationssystems ist. Eine typische Bewegung kann dabei das Ab- und wieder Anlegen einer Smartwatch, das Übergeben eines Mobiltelefons oder eine vergleichbare Bewegung umfassen.

Das Nutzererkennungsmodul ist konfiguriert einen Nutzerwechsel anhand einer grob- und/oder feinmotorischen Bewegung zu erkennen. Dazu ist das Nutzererkennungsmodul beispielsweise auf ein Erkennen einer grob- und/oder feinmotorischen Bewegung des Ab- und/oder Anlegens des mobilen, tragbaren Kommunikationssystems konfiguriert. Ferner ist das Nutzererkennungsmodul auf ein Erkennen von nutzerspezifischen Bewegungsmustern in den Messdaten und/oder den feinmotorischen Messdaten trainiert, wobei das Nutzererkennungsmodul wiederholt die folgenden Schritte ausführt:
- Eingabe der der Messdaten und/oder feinmotorischen Messdaten in das Nutzererkennungsmodul,
- Generieren eines vierten Klassifikationsergebnisses durch das Nutzererkennungsmodul, ob ein Nutzerwechsel stattfindet,
- Speichern des vierten Klassifikationsergebnisses in dem Speicher des mobilen, tragbaren Kommunikationssystems.

Anschließend greift das Nutzererkennungsmodul auf den Speicher des mobilen, tragbaren Kommunikationssystems zu, um mindestens eines der gespeicherten vierten Klassifikationsergebnisse aus dem Speicher auszulesen. Das mindestens eine vierte Klassifikationsergebnis wird ausgewertet, um zu überprüfen, ob ein Nutzerwechsel stattgefunden hat. Die bisherigen ersten, zweiten und/oder dritten Klassifikationsergebnisse werden im Falle eines Nutzerwechsels verworfen, um sicherzustellen, dass bei einem Nutzerwechsel ein nicht authentifizierter Nutzer das mobile, tragbare Kommunikationssystem verwendet. Dieser nicht authentifizierte Nutzer muss sich dann neu authentifizieren.

In einer weiteren Ausführungsform der Erfindung ist das Nutzererkennungsmodul so konfiguriert, dass es eine zumindest vorübergehende Beendigung der Nutzung des mobilen, tragbaren Kommunikationssystems durch den aktuellen Nutzer anhand von grob- und/oder feinmotorischen Messdaten erkennt. Dazu ist das Nutzererkennungsmodul beispielsweise auf ein Erkennen einer grob- und/oder feinmotorischen Bewegung des Ablegens des mobilen, tragbaren Kommunikationssystems konfiguriert. Wird eine solche Beendigung erkannt, werden beispielsweise die bisherigen ersten, zweiten und/oder dritten Klassifikationsergebnisse verworfen, um sicherzustellen, dass bei einem möglichen Nutzerwechsel ein nicht authentifizierter Nutzer das mobile, tragbare Kommunikationssystem verwendet. Dieser nicht authentifizierte Nutzer muss sich dann neu authentifizieren.

### Figurenbeschreibung

Im Weiteren werden Ausführungsformen der Erfindung mit Bezugnahme auf die Zeichnungen näher erläutert. Es zeigen:
- Figur 1: einen schematischen Aufbau eines beispielhaften mobilen, tragbaren Kommunikationssystems zur Ausführung des Verfahrens zur verhaltensbasierten Authentifizierung eines Nutzers.
- Figur 2: einen schematischen Ablauf einer verhaltensbasierten Authentifizierung in einem Ablaufdiagramm.
- Figur 3: eine Ausführungsform des mobilen, tragbaren Kommunikationssystems zum Ausführen des Verfahrens zur verhaltensbasierten Authentifizierung eines Nutzers.
- Figur 4: ein schematisches Verfahren zur Abarbeitung von Daten, die das mobile, tragbare Kommunikationssystem verarbeitet.
- Figur 5: ein Ablaufdiagramm eines beispielhaften Verfahrens, welches neben Messdaten einer Bewegung auch Anwendungsdaten berücksichtigt.

Elemente der nachfolgenden Ausführungsformen, die einander entsprechen, werden mit denselben Bezugszeichen gekennzeichnet.

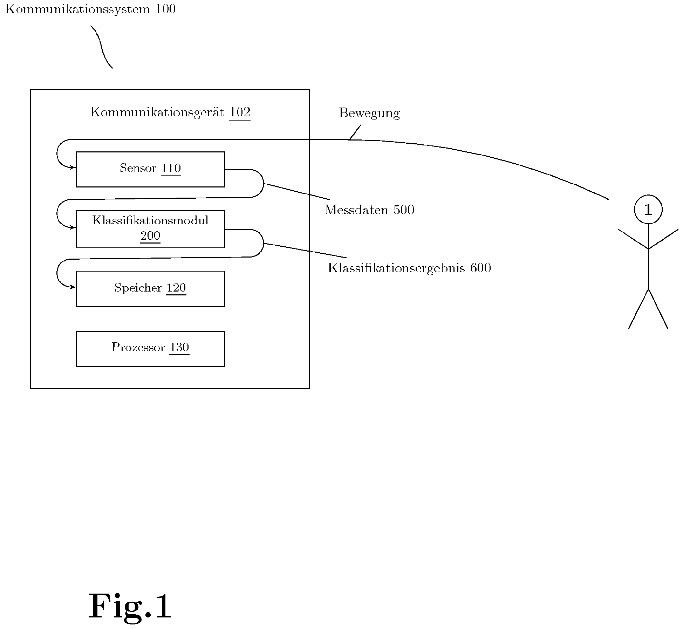

Figur 1 zeigt den schematischen Aufbau einer Ausführungsform eines mobilen, tragbaren Kommunikationssystems 100, welches von einem Nutzer 1 mitgeführt wird. Das mobile, tragbare Kommunikationssystem weist in dieser Ausführungsform ein einzelnes mobiles, tragbares Kommunikationsgerät 102 auf. Das mobile, tragbare Kommunikationsgerät 102 ist geeignet, um ein Verfahren zur verhaltensbasierten Authentifizierung des Nutzers 1 gegenüber dem mobilen, tragbaren Kommunikationssystem 100 auszuführen. Das mobile, tragbare Kommunikationsgerät 102 weist einen Sensor 110 auf, welcher dazu geeignet ist, eine grobmotorische Bewegung des Nutzers 1 als Messdaten 500 zu erfassen. Ferner weist das mobile, tragbare Kommunikationsgerät 102 ein Grobmotorikklassifikationsmodul 200 auf, welches geeignet ist, die Messdaten 500 des Sensors 110 zu verarbeiten. Das mobile, tragbare Kommunikationsgerät 102 weist ferner einen Speicher 120 auf, in dem die Messdaten 500 in verarbeiteter Form als Klassifikationsergebnis 600 gespeichert werden können. Das mobile, tragbare Kommunikationsgerät 102 weist ferner einen Prozessor 130 auf, welcher das Grobmotorikklassifikationsmodul 200 ausführt.

Führt der Nutzer 1 eine grobmotorische Bewegung aus und trägt dabei das mobile Kommunikationsgerät 102 bei sich, so kann der Sensor 110 diese Bewegung in Form von Messdaten 500 erfassen. Der Sensor 110 kann beispielsweise als ein Beschleunigungssensor oder ein Gyroskop oder eine Kombination aus beidem ausgebildet sein. Die Bewegung des aktuellen Nutzers 1 kann beispielsweise ein Gehen, ein Joggen, ein Rennen oder eine Bewegung des Armes sein, falls das Gerät, welches den Sensor 110 aufweist und Teil des mobilen, tragbaren Kommunikationssystems 100 ist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems 100 aus einer Tasche verstanden werden.

Das Grobmotorikklassifikationsmodul 200 empfängt die Messdaten 500 von dem Sensor 110 und klassifiziert die Messdaten 500 als eine grobmotorische Bewegung. Aus der Klassifikation generiert das Grobmotorikklassifikationsmodul 200 das Klassifikationsergebnis 600. Dieses Klassifikationsergebnis 600 wird im Speicher 120 des mobilen, tragbaren Kommunikationsgeräts 102 gespeichert.

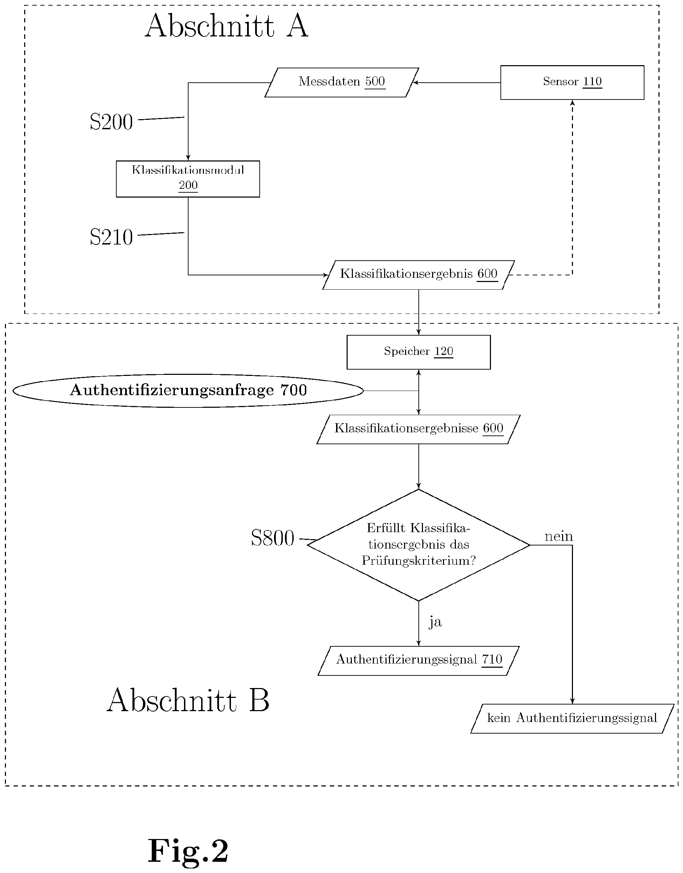

Figur 2 zeigt das Authentifizierungsverfahren 400 zur verhaltensbasierten Authentifizierung eines Nutzers gegenüber einem mobilen, tragbaren Kommunikationssystem 100 in einem Ablaufdiagramm. Das Authentifizierungsverfahren 400 kann dabei in zwei Abschnitte A und B unterteilt werden. Abschnitt A wird wiederholt ausgeführt, und bildet so eine schleifenartige Ausführungsstruktur. Der Sensor 110 erfasst die grobmotorische Bewegung des Nutzers 1 als Messdaten 500. Die Messdaten 500 werden in Schritt S200 in das Grobmotorikklassifikationsmodul 200 eingegeben. Aus den Messdaten 500 generiert das Grobmotorikklassifikationsmodul 200 in Schritt S210 das Klassifikationsergebnis 600. Das generierte Klassifikationsergebnis 600 wird im Speicher 120 des mobilen, tragbaren Klassifikationssystems 100 gespeichert. Der Sensor 110 erfasst dann neue Messdaten 500. Das ganze Verfahren gemäß Abschnitt A wird wiederholt ausgeführt.

In einer Ausführungsform der Erfindung erfasst der Sensor 110 die Messdaten 500 als Datenstrom (Stream), wobei das Grobmotorikklassifikationsmodul 200 die Messdaten 500 als Stream empfängt und verarbeitet. Die Klassifikationsergebnisse 600 werden dabei in sehr kurzen zeitlichen Abständen, die durch die Taktrate des Prozessors und/oder des Sensors vorgegeben werden, im Speicher 120 des mobilen, tragbaren Kommunikationssystems 100 abgespeichert.

Abschnitt B wird dann ausgeführt, wenn eine Anwendung eine Authentifizierungsanfrage 700 an das Betriebssystem und/oder ein zur verhaltensbasierten Authentifizierung konfiguriertes Anwendungsprogramm des mobilen, tragbaren Kommunikationssystems 100 sendet. Die Authentifizierungsanfrage 700 beinhaltet eine Anforderung zum Auslesen von mindestens einem Klassifikationsergebnis 600 aus dem Speicher 120. Das mindestens eine Klassifikationsergebnis wird dann aus dem Speicher 120 ausgelesen und in Schritt S800 von dem Betriebssystem oder dem zur verhaltensbasierten Authentifizierung konfigurierten Anwendungsprogramm gegen ein Prüfungskriterium 800 geprüft. Erfüllt das Klassifikationsergebnis 600 das Prüfungskriterium 800, so erzeugt das Betriebssystem oder das Anwendungsprogramm ein Authentifizierungssignal 710. Erfüllt das Klassifikationsergebnis 600 das Prüfungskriterium 800 nicht, so wird kein Authentifizierungssignal 710 erzeugt. In einer Ausführungsform der Erfindung werden mehrere Klassifikationsergebnisse 600 aus dem Speicher 120 des mobilen, tragbaren Kommunikationssystems 100 ausgelesen und gegen das Prüfungskriterium 800 geprüft.

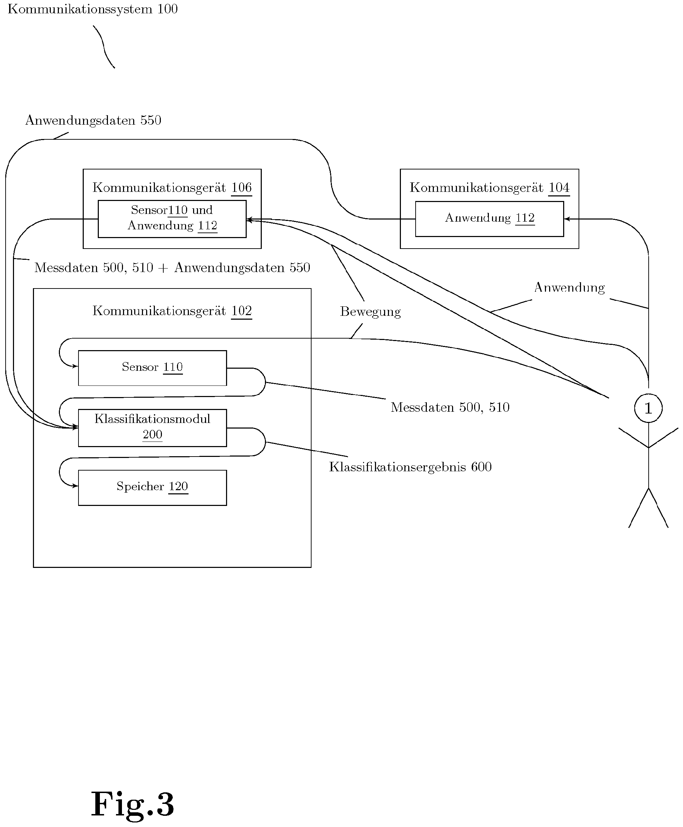

Figur 3 zeigt eine weitere Ausführungsform der Erfindung. Es ist der schematische Aufbau eines mobilen, tragbaren Kommunikationssystems 100 gezeigt, welcher aus mehreren Kommunikationsgeräten 102, 104 und 106 besteht. Die Kommunikationsgeräte 102, 104 und 106 führt der Nutzer 1 beispielweise mit sich. Die Kommunikationsgeräte 102, 104 und 106 sind in der Lage über eine Kommunikationsschnittstelle in jedem Gerät untereinander zu kommunizieren. Eine geeignete Kommunikation kann dabei beispielsweise über Bluetooth, WLAN, RFID, NFC oder eine Kabelverbindung durchgeführt werden.

In verschiedenen Ausführungsformen der Erfindung kann das mobile, tragbare Kommunikationssystem 100 ein, zwei, drei oder mehrere mobile, tragbare Kommunikationsgeräte umfassen.

Die Kommunikationsgeräte 102, 104 und 106 sind jeweils mit Sensoren 110, und Anwendungen 112 ausgestattet. Die Sensoren 110 können beispielsweise Sensoren zur Erfassung einer grobmotorischen Bewegung, wie zum Beispiel ein Beschleunigungssensor oder ein Gyroskop, sein. Die Anwendungen 112 erzeugen Anwendungsdaten 550.

In weiteren Ausführungsformen der Erfindung können die Anwendungen 112 auf Sensoren zur Erfassung der Position des mobilen, tragbaren Kommunikationssystems 100, Sensoren zur Erfassung der biometrischen Daten, insbesondere eine Kamera zur Erfassung von Formmerkmalen wie Gesichts-, Ohrmuschel- oder Handlinienform, ein Fingerabdrucksensor oder physiologische Sensoren, die beispielsweise den Blutdruck oder den Puls des Nutzers 1 messen, zugreifen, wobei diese Sensoren von dem mobilen, tragbaren Kommunikationssystem umfasst werden.

In einer weiteren Ausführungsform der Erfindung erfasst ein Sensor zur Erfassung von feinmotorischen Bewegungen eine feinmotorische Bewegung des Nutzers. Der Sensor zur Erfassung von feinmotorischen Bewegungen kann dabei als Bildschirm, insbesondere als Touchscreen ausgestaltet sein.

Die Messdaten 500, 510 und die Anwendungsdaten 550 werden, nachdem sie durch die Sensoren 110 und die Anwendungen 112 erfasst wurden, von den Kommunikationsgeräten 102, 104 und 106 an die Klassifikationsmodule 200 gesendet. Die Klassifikationsmodule 200 bestimmen für die Messdaten 500, 510 und den Anwendungsdaten 550 Konfidenzwerte, aus welchen das Klassifikationsergebnis 600 generiert wird. Das generierte Klassifikationsergebnis 600 wird dann im Speicher 120 gespeichert.

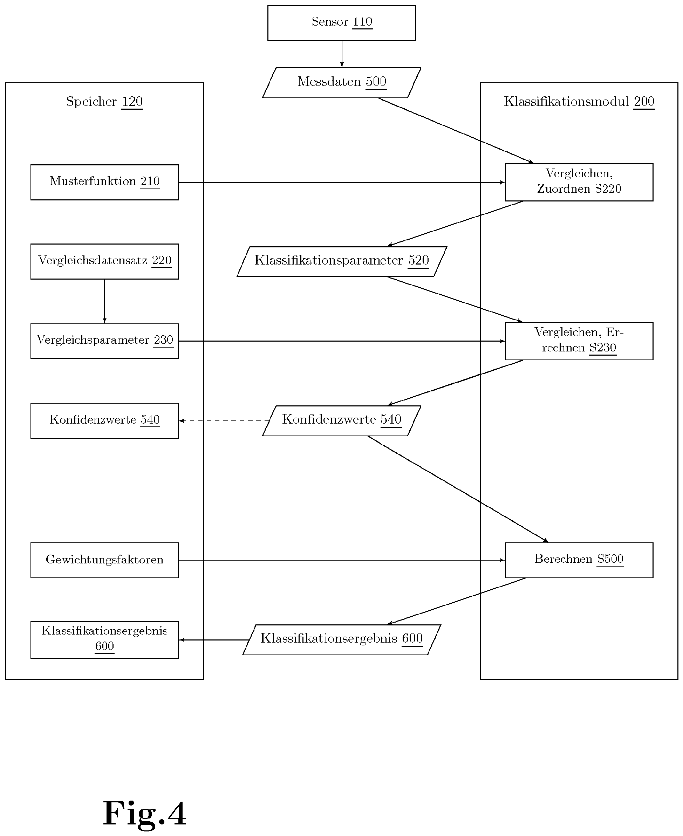

Figur 4 zeigt den schematischen Ablauf zur Bestimmung des Klassifikationsergebnisses 600 aus den Messdaten 500. Zunächst erfasst ein Sensor 110 die grobmotorische Bewegung des Nutzers 1 als Messdaten 500. Die Messdaten 500 werden dann an das Grobmotorikklassifikationsmodul 200 gesendet. Das Grobmotorikklassifikationsmodul 200 ruft aus dem Speicher eine Musterfunktion 210 ab und vergleicht in Schritt S220 die Musterfunktion 210 mit den Messdaten 500. Die Messdaten 500 werden einer ersten Anzahl von Klassifikationsparametern 520 zugeordnet. Im Speicher 120 des mobilen, tragbaren Kommunikationssystems 100 ist ein Vergleichsdatensatz 220 gespeichert, welcher Daten beinhaltet, die die grobmotorische Bewegung des Nutzers wiederspiegeln, wobei die Daten des Vergleichsdatensatzes 220 die Struktur der Messdaten 500 aufweisen.

Dem Vergleichsdatensatz 220 sind Vergleichsparameter 230 zugeordnet, welche aus den Daten des Vergleichsdatensatzes 220 errechnet wurden. Das Grobmotorikklassifikationsmodul 200 liest die Vergleichsparameter 230 aus dem Speicher 120 des mobilen, tragbaren Kommunikationssystems aus und vergleicht die Vergleichsparameter 230 mit den Klassifikationsparametern 520 in Schritt S230. Aus dem Unterschied errechnet das Grobmotorikklassifikationsmodul 200 mindestens einen Konfidenzwert 540, wobei jeder Konfidenzwert 540 einem Klassifikationsparameter 520 zugeordnet ist und somit die Anzahl der Klassifikationsparameter 520 gleich der Anzahl der Konfidenzwerte 540 ist.

Die Konfidenzwerte 540 werden dann in Schritt S500, zum Beispiel durch Bildung des Mittelwerts, des Medians, des Modus oder durch eine komplexere Berechnung, zum Klassifikationsergebnis 600 verarbeitet. Das Klassifikationsergebnis 600 wird auf dem Speicher 120 des mobilen, tragbaren Kommunikationssystems 100 gespeichert. Bei einer Authentifizierungsanfrage wird das Klassifikationsergebnis 600 aus dem Speicher 120 des mobilen, tragbaren Kommunikationssystems 100 ausgelesen.

In einer Ausführungsform der Erfindung werden die Anwendungsdaten 550 und die feinmotorischen Messdaten 510 analog zu den Messdaten 500 verarbeitet. Gemäß dieser Ausführungsform ist die grundlegende Struktur der verschiedenen Klassifikationsmodule gleich oder ähnlich, da das jeweilige Modul die gleichen Operationen ausführt. Die Befehle sind in den Modulen den jeweiligen Eingangsdaten angepasst.

In einer weiteren Ausführungsform der Erfindung werden die Konfidenzwerte 540 direkt im Speicher 120 des mobilen, tragbaren Kommunikationssystems 100 gespeichert und können bei einer Authentifizierungsanfrage 700 ausgelesen werden.

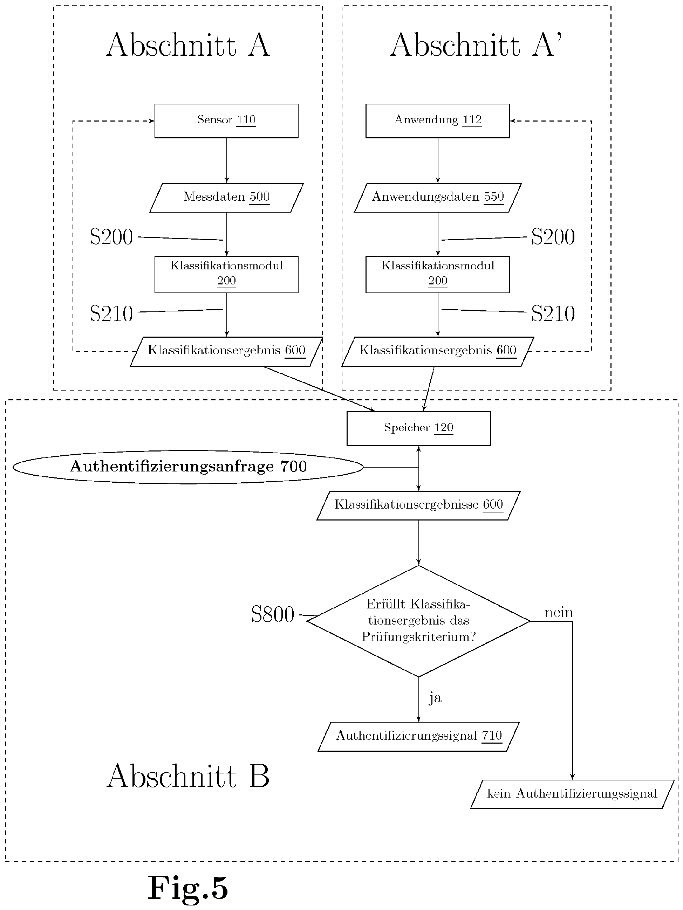

Figur 5 zeigt in einem Ablaufdiagramm den schematischen Ablauf einer weiteren Ausführungsform der Erfindung. Gemäß dieser Ausführungsform der Erfindung werden neben den Messdaten 500 auch Anwendungsdaten 550 erfasst und verarbeitet. Die Anwendungsdaten 550 können dabei die Positionsdaten des mobilen, tragbaren Kommunikationssystems, welche durch ein Verfahren zur Positionsbestimmung durch einen Positionssensor des mobilen, tragbaren Kommunikationssystems 100 erfasst werden, die Anwendungsnutzungsdaten des Nutzers 1, die biometrischen Daten des Nutzers 1, welche durch einen Sensor zur Erfassung von biometrischen Daten erfasst werden, die Verbindungsdaten des mobilen, tragbaren Kommunikationssystems 100 mit anderen Geräten, die Kalender- und/oder Uhrzeitdaten einer in dem mobilen, tragbaren Kommunikationssystem 100 implementierten Uhr oder einer externen Uhr, deren Signal durch ein Sensor des mobilen, tragbaren Kommunikationssystems 100 empfangen wird, umfassen.

Die Verfahrensschleife A' wird analog zur Verfahrensschleife A gemäß Figur 2 ausgeführt, wobei statt der Messdaten 500 die Anwendungsdaten 550 in das Anwendungsverhaltensklassifikationsmodul 200 eingegeben werden. Die Verfahrensschleife A und die Verfahrensschleife A' erzeugen jeweils ein Klassifikationsergebnis 600, welches im Speicher 120 des mobilen, tragbaren Kommunikationssystems 100 gespeichert wird.

In einer weiteren Ausführungsform der Erfindung enthält das Klassifikationsergebnis 600 die verarbeiteten Messdaten 500, die verarbeiteten Anwendungsdaten 550 und die verarbeiteten feinmotorischen Messdaten 510. Die feinmotorischen Messdaten 510 werden dabei von einer eigenen Verfahrensschleife A" (hier nicht gezeigt) verarbeitet.

Die Verfahrensschleife A" wird analog zur Verfahrensschleife A gemäß Figur 2 ausgeführt, wobei statt der Messdaten 500 die Messdaten 510 in das Feinmotorikklassifikationsmodul 200 eingegeben werden. Die Verfahrensschleife A und die Verfahrensschleife A" erzeugen jeweils ein Klassifikationsergebnis 600, welches im Speicher 120 des mobilen, tragbaren Kommunikationssystems 100 gespeichert wird.

Auf eine Authentifizierungsanfrage 700 wird das mindestens eine Klassifikationsergebnis 600 ausgelesen und gegen ein Prüfungskriterium 800 geprüft. Das Ergebnis der Prüfung des Klassifikationsergebnisses 600 gegen das Prüfungskriterium 800 bestimmt, ob ein Authentifizierungssignal 710 gesendet wird oder nicht. Ein Authentifizierungssignal 710 wird generiert und gesendet, falls das Prüfungskriterium 800 erfüllt ist. Ist das Prüfungskriterium 800 nicht erfüllt, wird kein Authentifizierungssignal 710 generiert.

In einer weiteren Ausführungsform der Erfindung wird bei Nichterfüllen des Prüfungskriteriums 800 ein Signal erzeugt, welches die fehlgeschlagene Authentifizierung des aktuellen Nutzers 1 gegenüber dem mobilen, tragbaren Kommunikationssystem 100 anzeigt.

Die Schritte der Authentifizierungsanfrage 700, das Auslesen des mindestens einen Klassifikationsergebnisses 600, das Prüfen des mindestens einen Klassifikationsergebnisses 600 gegen ein Prüfungskriterium 800 und das Generieren eines Authentifizierungssignals 710 sind durch die Verfahrensschleife B repräsentiert.

### Bezugszeichenliste

- 1:: Nutzer
- 100:: Kommunikationssystem
- 102:: Kommunikationsgerät
- 104:: Kommunikationsgerät
- 106:: Kommunikationsgerät
- 110:: Sensor
- 112:: Anwendung
- 120:: Speicher
- 130:: Prozessor
- 200:: Klassifikationsmodul
- 210:: Musterfunktion
- 220:: Vergleichsdatensatz
- 230:: Vergleichsparameter
- 400:: Authentifizierungsverfahren
- 500:: Messdaten
- 510:: Feinmotorische Messdaten
- 520:: Klassifikationsparameter
- 540:: Konfidenzwerte
- 550:: Anwendungsdaten
- 600:: Klassifikationsergebnis
- 700:: Authentifizierungsanfrage
- 710:: Authentifizierungssignal
- 800:: Prüfungskriterium
- 900:: Anwendung
- S200:: Eingabe der Messdaten in das Klassifikationsmodul
- S210:: Generieren des Klassifikationsergebnisses
- S220:: Vergleichen der Messdaten mit der Musterfunktion
- S230:: Vergleichen der Klassifikationsparameter mit den Vergleichsparametern
- S500:: Berechnen des Klassifikationsergebnisses
- S800:: Prüfen des Klassifikationsergebnisses

## Patentansprüche

1. Verfahren zur verhaltensbasierten Authentifizierung (400) eines aktuellen Nutzers (1) gegenüber einem mobilen, tragbaren Kommunikationssystem (100), welches mindestens einen Sensor (110) zur Erfassung von Messdaten (500), ein Grobmotorikklassifikationsmodul (200), einen Prozessor (130) und einen internen Speicher (120) aufweist,
wobei der Sensor (110) zur Erfassung der grobmotorischen Messdaten (500) einer grobmotorischen Bewegung eines aktuellen Nutzers (1) des mobilen, tragbaren Kommunikationssystems (100) ausgebildet ist,
wobei das Grobmotorikklassifikationsmodul (200) für eine Klassifikation der grobmotorischen Messdaten (500) konfiguriert und auf ein Erkennen einer grobmotorischen Bewegung eines registrierten Nutzers trainiert ist, wobei das Grobmotorikklassifikationsmodul (200) von dem Prozessor (130) des mobilen, tragbaren Kommunikationssystems (100) ausgeführt wird,
wobei das Verfahren zur verhaltensbasierten Authentifizierung (400) des aktuellen Nutzers (1) gegenüber einem mobilen, tragbaren Kommunikationssystem (100) die folgenden Schritte aufweist:
- Wiederholtes Ausführen der Schritte:
o Erfassen der grobmotorischen Messdaten (500) durch den mindestens einen Sensor (110) des mobilen, tragbaren Kommunikationssystems (100),
o Eingabe der grobmotorischen Messdaten (500) in das Grobmotorikklassifikationsmodul (200),
o Generieren eines ersten Klassifikationsergebnisses (600) durch das Grobmotorikklassifikationsmodul (200), ob der aktuelle Nutzer (1) ein in dem mobilen, tragbaren Kommunikationssystem (100) registrierte Nutzer ist,
o Speichern des ersten Klassifikationsergebnisses (600) in dem Speicher (120) des mobilen, tragbaren Kommunikationssystems (100),
- auf eine Authentifizierungsanfrage hin, Zugreifen auf den Speicher (120) des mobilen, tragbaren Kommunikationssystems (100), um mindestens eines der gespeicherten ersten Klassifikationsergebnisse (600) aus dem Speicher (120) auszulesen,
- Auslesen und Auswerten des mindestens einen ersten Klassifikationsergebnisses (600) gemäß einem vorgegebenen Prüfungskriterium (800),
- Erzeugen eines Authentifizierungssignals (710), falls das Prüfungskriterium (800) erfüllt ist, wobei das Authentifizierungssignal (710) eine erfolgreiche Authentifizierung des aktuellen Nutzers (1) signalisiert,
wobei das Prüfungskriterium (800) umfasst, dass das erste Klassifikationsergebnis (600) einen durch das Prüfungskriterium (800) vorgegebenen Schwellenwert überschreitet und ein durch das Prüfungskriterium (800) vorgegebenes Höchstalter des ersten Klassifikationsergebnisse (600) nicht überschritten wird.

2. Verfahren (400) nach Anspruch 1, wobei das mobile, tragbare Kommunikationssystem (100) ein Anwendungsverhaltensklassifikationsmodul (200) aufweist,
wobei das Anwendungsverhaltensklassifikationsmodul (200) auf eine Klassifikation von Anwendungsdaten (550) konfiguriert und auf ein Erkennen von nutzerspezifischen Anwendungsmustern in den Anwendungsdaten (550) trainiert ist, wobei das Anwendungsverhaltensklassifikationsmodul (200) von dem Prozessor (130) des mobilen, tragbaren Kommunikationssystems (100) ausgeführt wird,
wobei das Verfahren (400) ferner umfasst:
- Wiederholtes Ausführen der Schritte:
o Erfassen der Anwendungsdaten (550),
o Eingabe der Anwendungsdaten (550) in das Anwendungsverhaltensklassifikationsmodul (200),
o Generieren eines zweiten Klassifikationsergebnisses (600) durch das Anwendungsverhaltensklassifikationsmodul (200), ob der aktuelle Nutzer (1) der in dem mobilen, tragbaren Kommunikationssystem (100) registrierte Nutzer ist,
o Speichern des zweiten Klassifikationsergebnisses (600) in dem Speicher (120) des mobilen, tragbaren Kommunikationssystems (100),
- auf die Authentifizierungsanfrage hin, Zugreifen auf den Speicher (120) des mobilen, tragbaren Kommunikationssystems (100), um mindestens eines der gespeicherten zweiten Klassifikationsergebnisse (600) aus dem Speicher (120) auszulesen,
wobei in die Auswertung des ersten Klassifikationsergebnisses (600) gemäß dem Prüfungskriterium (800) auch das zweite Klassifikationsergebnis (600) mit eingeht.

3. Verfahren (400) nach einem der vorherigen Ansprüche, wobei das mobile, tragbare Kommunikationssystem (100) ein Feinmotorikklassifikationsmodul (200) aufweist,
wobei das Feinmotorikklassifikationsmodul (200) für eine Klassifikation von feinmotorischen Messdaten (510) konfiguriert und auf ein Erkennen einer feinmotorischen Bewegung eines registrierten Nutzers trainiert ist, wobei das Feinmotorikklassifikationsmodul (200) von dem Prozessor (130) des mobilen, tragbaren Kommunikationssystems (100) ausgeführt wird,
wobei das Verfahren (400) ferner umfasst:
- Wiederholtes Ausführen der Schritte:
o Erfassen der feinmotorischen Messdaten (510),
o Eingabe der feinmotorischen Messdaten (510) in das Feinmotorikklassifikationsmodul (200),
o Generieren eines dritten Klassifikationsergebnisses (600) durch das Feinmotorikklassifikationsmodul (200), ob der aktuelle Nutzer (1) der in dem mobilen, tragbaren Kommunikationssystem (100) registrierte Nutzer ist,
o Speichern des dritten Klassifikationsergebnisses (600) in dem Speicher (120) des mobilen, tragbaren Kommunikationssystems (100),
- auf die Authentifizierungsanfrage hin, Zugreifen auf den Speicher (120) des mobilen, tragbaren Kommunikationssystems (100), um mindestens eines der gespeicherten dritten Klassifikationsergebnisse (600) aus dem Speicher (120) auszulesen,
wobei in die Auswertung des ersten Klassifikationsergebnisses (600) gemäß dem Prüfungskriterium (800) auch das dritte Klassifikationsergebnis (600) mit eingeht.

4. Verfahren (400) nach einem der vorherigen Ansprüche, wobei in dem Speicher (120) des mobilen, tragbaren Kommunikationssystems (100) mindestens ein erstes Muster in Form einer ersten Musterfunktion (210) und mindestens ein erster Vergleichsdatensatz (220) gespeichert sind, wobei der erste Vergleichsdatensatz (220) Werte für mindestens einen ersten Vergleichsparameter (230) umfasst, wobei das Grobmotorikklassifikationsmodul (200) auf die Eingabe der grobmotorischen Messdaten (500) hin die folgenden Schritte ausführt
a. Vergleich der erfassten grobmotorischen Messdaten (500) mit der mindestens einen ersten Musterfunktion (210),
b. Zuordnen der grobmotorischen Messdaten (500) zu dem der ersten Musterfunktion (210) entsprechenden ersten Muster und erhalten von mindestens einem dem ersten Muster zugeordneten ersten Klassifikationsparameter (230), falls die grobmotorischen Messdaten (500) dem mindestens einen, ersten Muster zugeordnet werden können,
c. Errechnen eines Konfidenzwertes (540) für jeden ersten Klassifikationsparameter (230) durch einen Vergleich des mindestens einen ersten Klassifikationsparameter (230) mit dem jeweiligen ersten Vergleichsparameter (230) des ersten Vergleichsdatensatzes (220) und
d. Generieren des ersten Klassifikationsergebnisses (600) aus den ersten Konfidenzwerten (540) der ersten Klassifikationsparameter (230).

5. Verfahren (400) nach einem der Ansprüche 2-4, wobei in dem Speicher (120) des mobilen, tragbaren Kommunikationssystems (100) mindestens ein zweites Muster in Form einer zweiten Musterfunktion (210) und mindestens ein zweiter Vergleichsdatensatz (220) gespeichert sind, wobei der zweite Vergleichsdatensatz (220) Werte für mindestens einen zweiten Vergleichsparameter (230) umfasst, wobei das Anwendungsverhaltensklassifikationsmodul (200) auf die Eingabe der Anwendungsdaten (550) hin die folgenden Schritte ausführt:
a. Vergleich der erfassten Anwendungsdaten (550) mit der mindestens einen zweiten Musterfunktion (210),
b. Zuordnen der Anwendungsdaten (550) zu dem der zweiten Musterfunktion (210) zugeordneten zweiten Muster und erhalten von mindestens einem dem zweiten Muster entsprechenden zweiten Klassifikationsparameter (520), falls die Anwendungsdaten (550) dem mindesten einen, zweiten Muster zugeordnet werden können,
c. Errechnen eines Konfidenzwertes (540) für jeden der zweiten Klassifikationsparameter (520) durch einen Vergleich der zweiten Klassifikationsparameter (520) mit dem jeweiligen zweiten Vergleichsparameter (230) des zweiten Vergleichsdatensatzes (220),
d. Generieren des zweiten Klassifikationsergebnisses (600) aus den zweiten Konfidenzwerten (540) der zweiten Klassifikationsparameter (520).

6. Verfahren (400) nach einem der Ansprüche 3-5, wobei in dem Speicher (120) des mobilen, tragbaren Kommunikationssystems (100) mindestens ein drittes Muster in Form einer dritten Musterfunktion (210) und mindestens ein dritter Vergleichsdatensatz (220) gespeichert sind, wobei der dritte Vergleichsdatensatz (220) Werte für mindestens einen dritten Vergleichsparameter (230) umfasst, wobei das Feinmotorikklassifikationsmodul (200) auf die Eingabe der feinmotorischen Messdaten (510) hin die folgenden Schritte ausführt:
a. Vergleich der erfassten feinmotorischen Messdaten (510) mit der mindestens einen dritten Musterfunktion (210),
b. Zuordnen der feinmotorischen Messdaten (510) zu dem der dritten Musterfunktion (210) zugeordneten dritten Muster und erhalten von mindestens einem dem dritten Muster entsprechenden dritten Klassifikationsparameter (520), falls die feinmotorischen Messdaten (510) dem mindesten einen, dritten Muster zugeordnet werden können,
c. Errechnen eines Konfidenzwertes (540) für jeden der dritten Klassifikationsparameter (520) durch einen Vergleich der dritten Klassifikationsparameter (520) mit dem jeweiligen dritten Vergleichsparameter (230) des dritten Vergleichsdatensatzes (220), Generieren des dritten Klassifikationsergebnisses (600) aus den dritten Konfidenzwerten (540) der dritten Klassifikationsparameter (520).

7. Verfahren (400) nach einem der vorherigen Ansprüche, wobei das Prüfungskriterium (800) erfüllt ist, falls ferner:
a. mindestens eines der zweiten und/oder dritten Klassifikationsergebnisse (600) einen durch das Prüfungskriterium (800) vorgegebenen Schwellenwert überschreitet und/oder
b. ein durch das Prüfungskriterium (800) vorgegebenes Höchstalter der zweiten und/oder dritten Klassifikationsergebnisse (600) nicht überschritten werden und/oder
c. eine Mindestanzahl an ersten und/oder zweiten und/oder dritten Klassifikationsergebnissen (600) vorliegt, welche den Schwellenwert überschreitet.

8. Verfahren (400) nach einem der Ansprüche 2 bis 7, wobei bei der Auswertung des ersten und zweiten Klassifikationsergebnisses (600) das zweite Klassifikationsergebnis (600) nur dann mit einbezogen wird, wenn in einem der vorangegangenen Schritte das Grobmotorikklassifikationsmodul (200) in den grobmotorischen Messdaten (500) eine grobmotorische Bewegung des aktuellen Nutzers (1) erkannt hat.

9. Verfahren (400) nach einem der Ansprüche 3 bis 7, wobei bei der Auswertung des ersten und dritten Klassifikationsergebnisses (600) das dritte Klassifikationsergebnis (600) nur dann mit einbezogen wird, wenn in einem der vorangegangenen Schritte das Grobmotorikklassifikationsmodul (200) in den grobmotorischen Messdaten (500) eine grobmotorische Bewegung des aktuellen Nutzers (1) erkannt hat.

10. Verfahren (400) nach einem der Ansprüche 3 bis 8, wobei infolge einer nicht erfolgreichen Authentifizierung des aktuellen Nutzers gegenüber dem mobilen, tragbaren Kommunikationssystem mittels des ersten und/oder zweiten Klassifikationsergebnisses (600), nur die Auswertung des dritten Klassifikationsergebnisses (600) durchgeführt wird, um einen weiteren Authentifizierungsversuch durchzuführen.

11. Verfahren (400) nach einem der Ansprüche 5 bis 10, wobei das erste Klassifikationsergebnis (600) die ersten Konfidenzwerte (540), das zweite Klassifikationsergebnis (600) die zweiten Konfidenzwerte (540) und/oder das dritte Klassifikationsergebnis (600) die dritten Konfidenzwerte (540) umfasst und wobei die Konfidenzwerte (540) zu einem resultierenden Konfidenzwert durch den Prozessor (130) des mobilen, tragbaren Kommunikationssystems (100) verarbeitet werden, wobei der resultierende Konfidenzwert eine Wahrscheinlichkeit angibt, mit der der aktuelle Nutzer (1) als der im mobilen, tragbaren Kommunikationssystem registrierte Nutzer identifiziert wird.

12. Verfahren (400) nach Anspruch 11, wobei die einzelnen Konfidenzwerte (540) der ersten, zweiten und/oder dritten Klassifikationsparameter (520) bei der Auswertung mit jeweils einem Gewichtungsfaktor versehen sind, wobei die Gewichtungsfaktoren dem jeweiligen Konfidenzwert (540) zugeordnet werden.

13. Verfahren (400) nach einem der vorherigen Ansprüche, wobei eine auf dem mobilen, tragbaren Kommunikationssystem (100) ausgeführte Anwendung eine Anforderung zur Initiierung des Verfahrens (400) zur Authentifizierung des aktuellen Nutzers (1) an das Betriebssystem des mobilen, tragbaren Kommunikationssystems (100) sendet, wobei die Aufforderung das Prüfungskriterium (800) enthält, oder
wobei das mobile, tragbare Kommunikationssystem (100) eine Verbindung zu einem Netzwerk mit mindestens einem Serversystem aufweist, wobei eine auf dem Serversystem ausgeführte Online-Anwendung eine Anforderung zur Initiierung des Verfahrens (400) zur Authentifizierung des Nutzers (1) an das Betriebssystem des mobilen, tragbaren Kommunikationssystems (100) sendet, wobei die Anforderung das Prüfungskriterium (800) enthält.

14. Verfahren (400) nach einem der vorherigen Ansprüche, wobei auf dem mobilen, tragbaren Kommunikationssystem (100) mehrere Nutzer (1) registriert sind und ein Klassifikationsergebnis (600) für jeden Nutzer (1) generiert wird, wobei das mobile, tragbare Kommunikationssystem (100) ein Nutzererkennungsmodul aufweist, wobei das Nutzererkennungsmodul dazu konfiguriert ist den aktuellen Nutzer (1) als einen der registrierten Nutzer zu identifizieren , wobei das Nutzererkennungsmodul von dem Prozessor (130) des mobilen, tragbaren Kommunikationssystems (100) ausgeführt wird.

15. Verfahren (400) nach Anspruch 14, wobei der aktuelle Nutzer (1) durch das Nutzererkennungsmodul mittels eines Entscheidungsbaums identifiziert wird und/oder
wobei das Nutzererkennungsmodul dazu konfiguriert ist einen Nutzerwechsel anhand einer grob- und/oder feinmotorischen Bewegung des Nutzerwechsels zu erkennen,
wobei das Nutzererkennungsmodul für eine Klassifikation der grobmotorischen Messdaten (500) und/oder den feinmotorischen Messdaten (510) konfiguriert und auf ein Erkennen der grob- und/oder feinmotorischen Bewegung des Nutzerwechsels des mobilen, tragbaren Kommunikationssystems (100) trainiert ist, wobei das Nutzererkennungsmodul von dem Prozessor (130) des mobilen, tragbaren Kommunikationssystems (100) ausgeführt wird,
wobei das Verfahren (400) ferner umfasst:
- Wiederholtes Ausführen der Schritte:
o Eingabe der grobmotorischen Messdaten (500) und/oder feinmotorischen Messdaten (510) in das Nutzererkennungsmodul,
∘ Generieren eines vierten Klassifikationsergebnisses (600) durch das Nutzererkennungsmodul, ob ein Nutzerwechsel stattfindet,
∘ Speichern des vierten Klassifikationsergebnisses (600) in dem Speicher (120) des mobilen, tragbaren Kommunikationssystems (100),
- auf die Authentifizierungsanfrage hin, Zugreifen auf den Speicher (120) des mobilen, tragbaren Kommunikationssystems (100), um mindestens eines der gespeicherten vierten Klassifikationsergebnisse (600) aus dem Speicher (120) auszulesen,
- Auswerten des mindestens einen vierten Klassifikationsergebnisses (600), um zu überprüfen, ob ein Nutzerwechsel stattgefunden hat,
- Verwerfen der bisherigen ersten, zweiten und/oder dritten Klassifikationsergebnisse, falls ein Nutzerwechsel stattgefunden hat.

16. System zur verhaltensbasierten Authentifizierung eines aktuellen Nutzers (1) gegenüber einem mobilen, tragbaren Kommunikationssystem (100), welches mindestens einen Sensor (110) zur Erfassung von grobmotorischen Messdaten (500), ein Grobmotorikklassifikationsmodul (200), einen Prozessor (130) und einen internen Speicher (120) aufweist,
wobei der Sensor (110) zur Erfassung der grobmotorischen Messdaten (500) einer grobmotorischen Bewegung des aktuellen Nutzers (1) des mobilen, tragbaren Kommunikationssystems (100) ausgebildet ist,
wobei das Grobmotorikklassifikationsmodul (200) für eine Klassifikation der grobmotorischen Messdaten (500) konfiguriert und auf ein Erkennen der grobmotorischen Bewegung eines registrierten Nutzers trainiert ist, wobei das Grobmotorikklassifikationsmodul (200) von dem Prozessor (130) des mobilen, tragbaren Kommunikationssystems (100) ausgeführt wird,
wobei das System zur verhaltensbasierten Authentifizierung des aktuellen Nutzers (1) gegenüber dem mobilen, tragbaren Kommunikationssystem (100) die folgenden Verfahrensschritte ausführt:
- Wiederholtes Ausführen der Schritte:
o Erfassen der grobmotorischen Messdaten (500) durch den mindestens einen Sensor (110) des mobilen, tragbaren Kommunikationssystems (100),
o Eingabe der grobmotorischen Messdaten (500) in das Grobmotorikklassifikationsmodul (200),
o Generieren eines ersten Klassifikationsergebnisses (600) durch das Grobmotorikklassifikationsmodul (200), ob der aktuelle Nutzer (1) ein in dem mobilen, tragbaren Kommunikationssystem (100) registrierte Nutzer ist,
o Speichern des ersten Klassifikationsergebnisses (600) in dem Speicher (120) des mobilen, tragbaren Kommunikationssystems (100),
- auf eine Authentifizierungsanfrage hin, Zugreifen auf den Speicher (120) des mobilen, tragbaren Kommunikationssystems (100), um mindestens eines der gespeicherten ersten Klassifikationsergebnisse (600) aus dem Speicher (120) auszulesen,
- Auswerten des mindestens einen ausgelesenen Klassifikationsergebnisses (600) gemäß einem vorgegebenen Prüfungskriterium (800),
- Erzeugen eines Authentifizierungssignals, falls das Prüfungskriterium (800) erfüllt ist, wobei das Authentifizierungssignal (710) eine erfolgreiche Authentifizierung des Nutzers (1) signalisiert,
wobei das Prüfungskriterium (800) umfasst, dass das erste Klassifikationsergebnis (600) einen durch das Prüfungskriterium (800) vorgegebenen Schwellenwert überschreitet und ein durch das Prüfungskriterium (800) vorgegebenes Höchstalter des ersten Klassifikationsergebnisse (600) nicht überschritten wird.

## Claims

1. A method for behaviour-based authentication (400) of a current user (1) to a mobile, portable communication system (100), which has at least one sensor (110) for capturing measurement data (500), a gross-motor classification module (200), a processor (130) and an internal memory (120),
wherein the sensor (110) is designed to capture the gross-motor measurement data (500) of a gross-motor movement of a current user (1) of the mobile portable communication system (100),
wherein the gross-motor classification module (200) is configured for classification of the gross-motor measurement data (500) and is trained for recognition of a gross-motor movement of a registered user, wherein the gross-motor classification module (200) is executed by the processor (130) of the mobile portable communication system (100),
wherein the method for behaviour-based authentication (400) of the current user (1) to a mobile, portable communication system (100) comprises the following steps:
- repeated execution of the steps:
o capture of the gross-motor measurement data (500) by the at least one sensor (110) of the mobile, portable communication system (100),
o input of the gross-motor measurement data (500) into the gross-motor classification module (200),
o generation of a first classification result (600) by the gross-motor classification module (200), detailing whether the current user (1) is a user registered in the mobile, portable communication system (100),
o storage of the first classification result (600) in the memory (120) of the mobile, portable communication system (100),
- in response to an authentication request, access to the memory (120) of the mobile, portable communication system (100) in order to read out at least one of the stored first classification results (600) from the memory (120),
- reading out and evaluation of the at least one first classification result (600) in accordance with a specified checking criterion (800),
- generation of an authentication signal (710) if the checking criterion (800) is met, wherein the authentication signal (710) signals a successful authentication of the current user (1),
wherein the checking criterion (800) includes that the first classification result (600) exceeds a threshold value specified by the checking criterion (800) and a maximum age of the first classification results (600) specified by the checking criterion (800) is not exceeded.

2. The method (400) according to claim 1, wherein the mobile, portable communication system (100) comprises an application behaviour classification module (200),
wherein the application behaviour classification module (200) is configured for classification of application data (550) and is trained for recognition of user-specific application patterns in the application data (550), wherein the application behaviour classification module (200) is executed by the processor (130) of the mobile, portable communication system (100),
wherein the method (400) further comprises:
- repeated execution of the steps:
o capture of the application data (550),
o input of the application data (550) into the application behaviour classification module (200),
o generation of a second classification result (600) by the application behaviour classification module (200), detailing whether the current user (1) is the user registered in the mobile, portable communication system (100),
o storage of the second classification result (600) in the memory (120) of the mobile, portable communication system (100),
- in response the authentication request, access to the memory (120) of the mobile, portable communication system (100) in order to read out at least one of the stored second classification results (600) from the memory (120),
wherein the second classification result (600) is also included in the evaluation of the first classification result (600) in accordance with the checking criterion (800).

3. The method (400) according to one of the preceding claims, wherein the mobile, portable communication system (100) comprises a fine-motor classification module (200),
wherein the fine-motor classification module (200) is configured for classification of fine-motor measurement data (510) and is trained for recognition of a fine-motor movement of a registered user, wherein the fine-motor classification module (200) is executed by the processor (130) of the mobile, portable communication system (100),
wherein the method (400) further comprises:
- repeated execution of the steps:
o capture of the fine-motor measurement data (510),
o input of the fine-motor measurement data (510) into the fine-motor classification module (200),
o generation of a third classification result (600) by the fine-motor classification module (200), detailing whether the current user (1) is the user registered in the mobile, portable communication system (100),
o storage of the third classification result (600) in the memory (120) of the mobile, portable communication system (100),
- in response to the authentication request, access to the memory (120) of the mobile, portable communication system (100) in order to read out at least one of the stored third classification results (600) from the memory (120),
wherein the third classification result (600) is also included in the evaluation of the first classification result (600) in accordance with the checking criterion (800).

4. The method (400) according to any one of the preceding claims, wherein at least one first pattern in the form of a first pattern function (210) and at least one first comparison data set (220) are stored in the memory (120) of the mobile, portable communication system (100), wherein the first comparison data set (220) comprises values for at least one first comparison parameter (230), wherein the gross-motor classification module (200) performs the following steps when the gross-motor measurement data (500) are input:
a. comparison of the captured gross-motor measurement data (500) with the at least one first pattern function (210),
b. assignment of the gross-motor measurement data (500) to the first pattern corresponding to the first pattern function (210) and attainment of at least one first classification parameter (230) assigned to the first pattern, if the gross-motor measurement data (500) may be assigned to the at least one first pattern,
c. calculation of a confidence value (540) for each first classification parameter (230) by a comparison of the at least one first classification parameter (230) with the relevant first comparison parameter (230) of the first comparison data set (220), and
d. generation of the first classification result (600) from the first confidence values (540) of the first classification parameters (230).

5. The method (400) according to any one of claims 2-4, wherein at least one second pattern in the form of a second pattern function (210) and at least one second comparison data set (220) are stored in the memory (120) of the mobile, portable communication system (100), wherein the second comparison data set (220) comprises values for at least one second comparison parameter (230), wherein the application behaviour classification module (200) performs the following steps when the application data (550) are input:
a. comparison of the captured application data (550) with the at least one second pattern function (210),
b. assignment of the application data (550) to the second pattern assigned to the second pattern function (210) and attainment of at least one second classification parameter (520) corresponding to the second pattern, if the application data (550) may be assigned to the at least one second pattern,
c. calculation of a confidence value (540) for each second classification parameter (520) by a comparison of the second classification parameter (520) with the relevant second comparison parameter (230) of the second comparison data set (220), and
d. generation of the second classification result (600) from the second confidence values (540) of the second classification parameters (520).

6. The method (400) according to any one of claims 4-6, wherein at least one third pattern in the form of a third pattern function (210) and at least one third comparison data set (220) are stored in the memory (120) of the mobile, portable communication system (100), wherein the third comparison data set (220) comprises values for at least one third comparison parameter (230), wherein the fine-motor classification module (200) performs the following steps when the fine-motor measurement data (510) are input:
a. comparison of the captured fine-motor measurement data (510) with the at least one third pattern function (210),
b. assignment of the fine-motor measurement data (510) to the third pattern assigned to the third pattern function (210) and attainment of at least one third classification parameter (520) corresponding to the third pattern, if the fine-motor measurement data (510) may be assigned to the at least one third pattern,
c. calculation of a confidence value (540) for each third classification parameter (520) by a comparison of the third classification parameter (520) with the relevant third comparison parameter (230) of the third comparison data set (220), and
generation of the third classification result (600) from the third confidence values (540) of the third classification parameters (520).

7. The method (400) according to any one of the preceding claims, wherein the checking criterion (800) is met if also:
a. at least one of the second and/or third classification results (600) exceeds a threshold value specified by the checking criterion (800) and/or
b. a maximum age of the second and/or third classification results (600) specified by the checking criterion (800) is not exceeded and/or
c. a minimum number of first and/or second and/or third classification results (600) exceeding the threshold value is present.

8. The method (400) according to any one of claims 2 to 7, wherein, at the time of evaluation of the first and second classification result (600), the second classification result (600) is included only if, in one of the previous steps, the gross-motor classification module (200) recognised a gross-motor movement of the current user (1) in the gross-motor measurement data (500).

9. The method (400) according to any one of claims 3 to 7, wherein, at the time of evaluation of the first and third classification result (600), the third classification result (600) is included only if, in one of the previous steps, the gross-motor classification module (200) recognised a gross-motor movement of the current user (1) in the gross-motor measurement data (500).

10. The method (400) according to any one of claims 3 to 8, wherein, as a result of an unsuccessful authentication of the current user to the mobile, portable communication system by means of the first and/or second classification result (600), only the evaluation of the third classification result (600) is performed, in order to carry out a further authentication attempt.

11. The method (400) according to any one of claims 5 to 10, wherein the first classification result (600) comprises the first confidence values (540), the second classification result (600) comprises the second confidence values (540) and/or the third classification result (600) comprises the third confidence values (540), and wherein the confidence values (540) are processed by the processor (130) of the mobile, portable communication system (100) to give a resultant confidence value, wherein the resultant confidence value specifies a likelihood with which the current user (1) is identified as the user registered in the mobile, portable communication system.

12. The method (400) according to claim 11, wherein the individual confidence values (540) of the first, second and/or third classification parameter (520) are each provided at the time of the evaluation with a weighting factor, wherein the weighting factors are assigned to the respective confidence values (540).

13. The method (400) according to any one of the preceding claims, wherein an application executed on the mobile, portable communication system (100) sends a request to initiate the method (400) for authentication of the current user (1) to the operating system of the mobile, portable communication system (100), wherein the request contains the checking criterion (800), or
wherein the mobile, portable communication system (100) has a connection to a network comprising at least one server system, wherein an online application executed on the server system sends a request to initiate the method (400) for authentication of the user (1) to the operating system of the mobile, portable communication system (100), wherein the request contains the checking criterion (800).

14. The method (400) according to any one of the preceding claims, wherein a number of users (1) are registered on the mobile, portable communication system (100) and a classification result (600) is generated for each user (1), wherein the mobile, portable communication system (100) has a user recognition module, wherein the user recognition module is configured to identify the current user (1) as one of the registered users, wherein the user recognition module is executed by the processor (130) of the mobile, portable communication system (100).

15. The method (400) according to claim 14, wherein the current user (1) is identified by the user recognition module by means of a decision tree, and/or
wherein the user recognition module is configured to recognise a change of user on the basis of a gross-motor and/or fine-motor movement of the change of user, wherein the user recognition module is configured for a classification of the gross-motor measurement data (500) and/or the fine-motor measurement data (510) and is trained for recognition of the gross-motor and/or fine-motor movement of the change of user of the mobile, portable communication system (100), wherein the user recognition module is executed by the processor (130) of the mobile, portable communication system (100),
wherein the method (400) further comprises:
- repeated execution of the steps:
o input of the gross-motor measurement data (500) and/or fine-motor measurement data (510) into the user recognition module,
o generation of a fourth classification result (600) by the user recognition module, detailing whether a change of user has occurred,
o storage of the fourth classification result (600) in the memory (120) of the mobile, portable communication system (100),
- in response to the authentication request, access to the memory (120) of the mobile, portable communication system (100) in order to read out at least one of the stored fourth classification results (600) from the memory (120),
- evaluation of the at least one fourth classification result (600) in order to check whether a change of user has occurred,
- discardment of the previous first, second and/or third classification results if a change of user has occurred.

16. A system for behaviour-based authentication of a current user (1) to a mobile, portable communication system (100), which has at least one sensor (110) for capturing gross-motor measurement data (500), a gross-motor classification module (200), a processor (130) and an internal memory (120),
wherein the sensor (110) is designed to capture the gross-motor measurement data (500) of a gross-motor movement of the current user (1) of the mobile, portable communication system (100),
wherein the gross-motor classification module (200) is configured for classification of the gross-motor measurement data (500) and is trained for recognition of the gross-motor movement of a registered user, wherein the gross-motor classification module (200) is executed by the processor (130) of the mobile portable communication system (100),
wherein the system for behaviour-based authentication of the current user (1) to the mobile, portable communication system (100) performs the following method steps:
- repeated execution of the steps:
o capture of the gross-motor measurement data (500) by the at least one sensor (110) of the mobile, portable communication system (100),
o input of the gross-motor measurement data (500) into the gross-motor classification module (200),
o generation of a first classification result (600) by the gross-motor classification module (200), detailing whether the current user (1) is a user registered in the mobile, portable communication system (100),
o storage of the first classification result (600) in the memory (120) of the mobile, portable communication system (100),
- in response to an authentication request, access to the memory (120) of the mobile, portable communication system (100) in order to read out at least one of the stored first classification results (600) from the memory (120),
- evaluation of the at least one read-out classification result (600) in accordance with a specified checking criterion (800),
- generation of an authentication signal if the checking criterion (800) is met, wherein the authentication signal (710) signals a successful authentication of the user (1),
wherein the checking criterion (800) includes that the first classification result (600) exceeds a threshold value specified by the checking criterion (800) and a maximum age of the first classification results (600) specified by the checking criterion (800) is not exceeded.

## Revendications

1. Procédé d'authentification basée sur le comportement (400) d'un utilisateur actuel (1) vis-à-vis d'un système de communication mobile, portable (100), lequel présente au moins un capteur (110) pour la détection de données de mesure (500), un module de classification de motricité grossière (200), un processeur (130) et une mémoire (120) interne,
dans lequel le capteur (110) est conçu pour la détection de données de mesures de motricité grossière (500) d'un mouvement de motricité grossière d'un utilisateur actuel (1) du système de communication mobile, portable (100),
dans lequel le module de classification de motricité grossière (200) est configuré pour une classification des données de mesure de motricité grossière (500) et est entraîné pour une reconnaissance d'un mouvement de motricité grossière d'un utilisateur enregistré, où le module de classification de motricité grossière (200) est exécuté par le processeur (130) du système de communication mobile, portable (100),
le procédé d'authentification basée sur le comportement (400) de l'utilisateur actuel (1) vis-à-vis d'un système de communication mobile, portable (100) présentant les étapes suivantes :
- l'exécution répétée des étapes :
∘ de détection des données de mesure de motricité grossière (500) par l'au moins un capteur (110) du système de communication mobile, portable (100),
∘ d'entrée des données de mesure de motricité grossière (500) dans le module de classification de motricité grossière (200),
∘ de génération d'un premier résultat de classification (600) par le module de classification de motricité grossière (200) si l'utilisateur actuel (1) est un utilisateur enregistré dans le système de communication mobile, portable (100),
∘ d'enregistrement du premier résultat de classification (600) dans la mémoire (120) du système de communication mobile, portable (100),
- suite à une demande d'authentification, l'accès à la mémoire (120) du système de communication mobile, portable (100) afin de lire au moins un des premiers résultats de classification (600) enregistré à partir de la mémoire (120),
- la lecture et l'évaluation de l'au moins un premier résultat de classification (600) selon un critère de vérification (800) prédéfini,
- la création d'un signal d'authentification (710) dans le cas où le critère de vérification (800) est satisfait, où le signal d'authentification (710) signale une authentification réussie de l'utilisateur actuel (1),
où le critère de vérification (800) comprend le fait que le premier résultat de classification (600) dépasse une valeur de seuil prédéfinie par le critère de vérification (800) et ne dépasse pas un âge limite prédéfini par le critère de vérification (800) du premier résultat de classification (600).

2. Procédé (400) selon la revendication 1, dans lequel le système de communication mobile, portable (100) présente un module de classification de comportement des applications (200),
dans lequel le module de classification de comportement des applications (200) est configuré pour une classification de données d'application (550) et est entraîné pour une reconnaissance de modèles d'applications spécifiques pour l'utilisateur dans les données d'application (550), où le module de classification de comportement des applications (200) est exécuté par le processeur (130) du système de communication mobile, portable (100),
le procédé (400) comprenant en outre :
- l'exécution répétée des étapes :
∘ de détection des données d'application (550),
∘ d'entrée des données d'application (550) dans le module de classification de comportement des applications (200),
∘ de génération d'un deuxième résultat de classification (600) par le module de classification de comportement des applications (200) si l'utilisateur actuel (1) est l'utilisateur enregistré dans le système de communication mobile, portable (100),
∘ d'enregistrement du deuxième résultat de classification (600) dans la mémoire (120) du système de communication mobile, portable (100),
- suite à la demande d'authentification, l'accès à la mémoire (120) du système de communication mobile, portable (100) afin de lire au moins un des deuxièmes résultats de classification (600) enregistrés à partir de la mémoire (120), dans lequel également le deuxième résultat de classification (600) est mis en cause dans l'évaluation du premier résultat de classification (600) selon le critère de vérification (800).

3. Procédé (400) selon l'une des revendications précédentes, dans lequel le système de communication mobile, portable (100) présente un module de classification de motricité fine (200),
dans lequel le module de classification de motricité fine (200) est configuré pour une classification de données de mesure de motricité fine (510) et est entraîné pour une reconnaissance d'un mouvement de motricité fine d'un utilisateur enregistré, où le module de classification de motricité fine (200) est exécuté par le processeur (130) du système de communication mobile, portable (100),
le procédé (400) comprenant en outre :
- l'exécution répétée des étapes :
∘ de détection des données de mesure de motricité fine (510),
∘ d'entrée des données de mesure de motricité fine (510) dans le module de classification de motricité fine (200),
∘ de génération d'un troisième résultat de classification (600) par le module de classification de motricité fine (200) si l'utilisateur actuel (1) est l'utilisateur enregistré dans le système de communication mobile, portable (100),
∘ d'enregistrement du troisième résultat de classification (600) dans la mémoire (120) du système de communication mobile, portable (100),
- suite à la demande d'authentification, l'accès à la mémoire (120) du système de communication mobile, portable (100) afin de lire au moins un des troisièmes résultats de classification (600) enregistrés à partir de la mémoire (120),
dans lequel également le troisième résultat de classification (600) est mis en cause dans l'évaluation du premier résultat de classification (600) selon le critère de vérification (800).

4. Procédé (400) selon l'une des revendications précédentes, dans lequel au moins un premier modèle sous la forme d'une première fonction modèle (210) et au moins un premier ensemble de données de comparaison (220) sont enregistrés dans la mémoire (120) du système de communication mobile, portable (100), où le premier ensemble de données de comparaison (220) comprend des valeurs pour au moins un premier paramètre de comparaison (230), où le
module de classification de motricité grossière (200), suite à l'entrée des données de mesure de motricité grossière (500), exécute les étapes suivantes
a. la comparaison des données de mesure de motricité grossière (500) détectées avec l'au moins une première fonction modèle (210),
b. l'association des données de mesure de motricité grossière (500) au premier modèle correspondant à la première fonction modèle (210) et l'obtention d'au moins un premier paramètre de classification (230) associé au premier modèle dans le cas où les données de mesure de motricité grossière (500) peuvent être associées à l'au moins un premier modèle,
c. le calcul d'une valeur de confiance (540) pour chaque premier paramètre de classification (230) par une comparaison de l'au moins un premier paramètre de classification (230) avec le premier paramètre de comparaison (230) respectif du premier ensemble de données de comparaison (220), et
d. la génération du premier résultat de classification (600) à partir des premières valeurs de confiance (540) des premiers paramètres de classification (230).

5. Procédé (400) selon l'une des revendications 2 à 4, dans lequel au moins un deuxième modèle sous la forme d'une deuxième fonction modèle (210) et au moins un deuxième ensemble de données de comparaison (220) sont enregistrés dans la mémoire (120) du système de communication mobile, portable (100), où le deuxième ensemble de données de comparaison (220) comprend des valeurs pour au moins un deuxième paramètre de comparaison (230), où le
module de classification de comportement des applications (200), suite à l'entrée des données d'application (550), exécute les étapes suivantes :
a. de comparaison des données d'application (550) détectées avec l'au moins une deuxième fonction modèle (210),
b. d'association des données d'application (550) au deuxième modèle correspondant à la deuxième fonction modèle (210) et d'obtention d'au moins un deuxième paramètre de classification (520) correspondant au deuxième modèle dans le cas où les données d'application (550) peuvent être associées à l'au moins un deuxième modèle,
c. de calcul d'une valeur de confiance (540) pour chacun des deuxièmes paramètres de classification (520) par une comparaison des deuxièmes paramètres de classification (520) avec les deuxièmes paramètres de comparaison (230) respectifs du deuxième ensemble de données de comparaison (220),
d. de génération du deuxième résultat de classification (600) à partir des deuxièmes valeurs de confiance (540) des deuxièmes paramètres de classification (520).

6. Procédé (400) selon l'une des revendications 3 à 5, dans lequel au moins un troisième modèle sous la forme d'une troisième fonction modèle (210) et au moins un troisième ensemble de données de comparaison (220) sont enregistrés dans la mémoire (120) du système de communication mobile, portable (100), où le troisième ensemble de données de comparaison (220) comprend des valeurs pour au moins un troisième paramètre de comparaison (230), où le
module de classification de motricité fine (200), suite à l'entrée des données de mesure de motricité fine (510), exécute les étapes suivantes :
a. la comparaison des données de mesure de motricité fine (510) détectées avec l'au moins une troisième fonction modèle (210),
b. l'association des données de mesure de motricité fine (510) au troisième modèle correspondant à la troisième fonction modèle (210) et l'obtention d'au moins un troisième paramètre de classification (520) correspondant au troisième modèle dans le cas où les données de mesure de motricité fine (510) peuvent être associées à l'au moins un troisième modèle,
c. le calcul d'une valeur de confiance (540) pour chacun des troisièmes paramètres de classification (520) par une comparaison des troisièmes paramètres de classification (520) avec les troisièmes paramètres de comparaison (230) respectifs du troisième ensemble de données de comparaison (220),
la génération du troisième résultat de classification (600) à partir des troisièmes valeurs de confiance (540) des troisièmes paramètres de classification (520).

7. Procédé (400) selon l'une des revendications précédentes, dans lequel le critère de vérification (800) est satisfait, dans le cas où, en outre :
a. au moins un parmi les deuxième et/ou troisième résultats de classification (600) dépasse une valeur de seuil prédéfinie par le critère de vérification (800), et/ou
b. un âge limite prédéfini par le critère de vérification (800) des deuxième et/ou troisième résultats de classification (600) n'est pas dépassé, et/ou
c. il y a une quantité minimale de premier, et/ou deuxième et/ou troisième résultats de classification (600), laquelle dépasse la valeur de seuil.

8. Procédé (400) selon l'une des revendications 2 à 7, dans lequel, lors de l'évaluation du premier et du deuxième résultat de classification (600), le deuxième résultat de classification (600) n'entre en ligne de compte que si, dans une des étapes précédentes, le module de classification de motricité grossière (200) a reconnu un mouvement de motricité grossière de l'utilisateur actuel (1) dans les données de mesure de motricité grossière (500).

9. Procédé (400) selon l'une des revendications 3 à 7, dans lequel, lors de l'évaluation du premier et du troisième résultat de classification (600), le troisième résultat de classification (600) n'entre en ligne de compte que si, dans une des étapes précédentes, le module de classification de motricité grossière (200) a reconnu un mouvement de motricité grossière de l'utilisateur actuel (1) dans les données de mesure de motricité grossière (500).

10. Procédé (400) selon l'une des revendications 3 à 8, dans lequel, suite à une authentification non réussie de l'utilisateur actuel vis-à-vis du système de communication mobile, portable, uniquement l'évaluation du troisième résultat de classification (600) est exécutée au moyen du premier et/ou du deuxième résultat de classification (600), afin d'exécuter un nouvel essai d'authentification.

11. Procédé (400) selon l'une des revendications 5 à 10, dans lequel le premier résultat de classification (600) comprend les premières valeurs de confiance (540), le deuxième résultat de classification (600) comprend les deuxièmes valeurs de confiance (540) et/ou le troisième résultat de classification (600) comprend les troisièmes valeurs de confiance (540), et dans lequel les valeurs de confiance (540) sont exploitées par le processeur (130) du système de communication mobile, portable (100) pour donner une valeur de confiance résultante, où la valeur de confiance résultante indique une probabilité avec laquelle l'utilisateur actuel (1) est identifié comme étant l'utilisateur enregistré dans le système de communication mobile, portable.

12. Procédé (400) selon la revendication 11, dans lequel les valeurs de confiance (540) individuelles des premier, deuxième et/ou troisième paramètres de classification (520) sont pourvues respectivement d'un facteur de pondération lors de l'évaluation, où les facteurs de pondération sont associés aux valeurs de confiance (540) respectives.

13. Procédé (400) selon l'une des revendications précédentes, dans lequel une application exécutée sur le système de communication mobile, portable (100) envoie une demande d'initialisation du procédé (400) d'authentification de l'utilisateur actuel (1) au système d'exploitation du système de communication mobile, portable (100), où la demande contient le critère de vérification (800), ou
dans lequel le système de communication mobile, portable (100) présente une connexion vers un réseau avec au moins un système serveur, où une application internet exécutée sur le système serveur envoie une demande d'initialisation du procédé (400) d'authentification de l'utilisateur (1) au système d'exploitation du système de communication mobile, portable (100), où la demande contient le critère de vérification (800).

14. Procédé (400) selon l'une des revendications précédentes, dans lequel plusieurs utilisateurs (1) sont enregistrés sur le système de communication mobile, portable (100) et un résultat de classification (600) est généré pour chaque utilisateur (1), où le système de communication mobile, portable (100) présente un module de reconnaissance d'utilisateur, où le module de reconnaissance d'utilisateur est conçu pour identifier l'utilisateur actuel (1) comme étant l'utilisateur enregistré, où le module de reconnaissance d'utilisateur est exécuté par le processeur (130) du système de communication mobile, portable (100).

15. Procédé (400) selon la revendication 14, dans lequel l'utilisateur actuel (1) est identifié par le module de reconnaissance d'utilisateur au moyen d'un arbre de décision, et/ou
dans lequel le module de reconnaissance d'utilisateur est conçu pour reconnaître un changement d'utilisateur à l'aide d'un mouvement de motricité grossière et/ou fine du changement d'utilisateur,
dans lequel le module de reconnaissance d'utilisateur est configuré pour une classification des données de mesure de motricité grossière (500) et/ou des données de mesure de motricité fine (510) et est entraîné pour une reconnaissance du mouvement de motricité grossière et/ou fine du changement d'utilisateur du système de communication mobile, portable (100), où le module de reconnaissance d'utilisateur est exécuté par le processeur (130) du système de communication mobile, portable (100),
le procédé (400) comprenant en outre :
- l'exécution répétée des étapes :
∘ d'entrée des données de mesure de motricité grossière (500) et/ou des données de mesure de motricité fine (510) dans le module de reconnaissance d'utilisateur,
∘ de génération d'un quatrième résultat de classification (600) par le module de reconnaissance d'utilisateur si un changement d'utilisateur a lieu,
∘ d'enregistrement du quatrième résultat de classification (600) dans la mémoire (120) du système de communication mobile, portable (100),
- suite à la demande d'authentification, l'accès à la mémoire (120) du système de communication mobile, portable (100) afin de lire au moins un des quatrièmes résultats de classification (600) enregistrés à partir de la mémoire (120),
- l'évaluation de l'au moins un quatrième résultat de classification (600) afin de vérifier s'il y a eu un changement d'utilisateur,
- le rejet des premier, deuxième et/ou troisième résultats de classification dans le cas où un changement d'utilisateur a eu lieu.

16. Système d'authentification basée sur le comportement d'un utilisateur actuel (1) vis-à-vis d'un système de communication mobile, portable (100), lequel présente au moins un capteur (110) pour la détection de données de mesure de motricité grossière (500), un module de classification de motricité grossière (200), un processeur (130) et une mémoire (120) interne,
dans lequel le capteur (110) est conçu pour la détection de données de mesures de motricité grossière (500) d'un mouvement de motricité grossière de l'utilisateur actuel (1) du système de communication mobile, portable (100),
dans lequel le module de classification de motricité grossière (200) est configuré pour une classification des données de mesure de motricité grossière (500) et est entraîné pour une reconnaissance d'un mouvement de motricité grossière d'un utilisateur enregistré, où le module de classification de motricité grossière (200) est exécuté par le processeur (130) du système de communication mobile, portable (100),
le système d'authentification basée sur le comportement de l'utilisateur actuel (1) vis-à-vis d'un système de communication mobile, portable (100) présentant les étapes de procédé suivantes :
- l'exécution répétée des étapes :
∘ de détection des données de mesure de motricité grossière (500) par l'au moins un capteur (110) du système de communication mobile, portable (100),
∘ d'entrée des données de mesure de motricité grossière (500) dans le module de classification de motricité grossière (200),
∘ de génération d'un premier résultat de classification (600) par le module de classification de motricité grossière (200) si l'utilisateur actuel (1) est un utilisateur enregistré dans le système de communication mobile, portable (100),
∘ d'enregistrement du premier résultat de classification (600) dans la mémoire (120) du système de communication mobile, portable (100),
- suite à une demande d'authentification, l'accès à la mémoire (120) du système de communication mobile, portable (100) afin de lire au moins un des premiers résultats de classification (600) enregistrés à partir de la mémoire (120),
- l'évaluation de l'au moins un premier résultat de classification (600) lu selon un critère de vérification (800) prédéfini,
- la création d'un signal d'authentification dans le cas où le critère de vérification (800) est satisfait, où le signal d'authentification (710) signale une authentification réussie de l'utilisateur actuel (1),
où le critère de vérification (800) comprend le fait que le premier résultat de classification (600) dépasse une valeur de seuil prédéfinie par le critère de vérification (800) et ne dépasse pas un âge limite prédéfini par le critère de vérification (800) du premier résultat de classification (600).
